# EUROPEAN PATENT SPECIFICATION

(11) **EP 4 012 681 B1**
(45) Date of publication and mention of the grant of the patent: **14.02.2024**
(21) Application number: 20867723.7
(22) Date of filing: 24.09.2020
(51) Int. Cl.: G08G 1/16, B62J 45/40, B62J 45/415, B62J 99/00, B62J 27/00, B62L 3/08, G08G 1/01, G08G 1/017, G08G 1/04, B60W 10/18, B60W 10/20, B60W 30/09, B60W 50/14

(54) **LEANING VEHICLE PROVIDED WITH FCW CONTROL DEVICE**
NEIGEFAHRZEUG MIT FCW-STEUERVORRICHTUNG
VÉHICULE À INCLINAISON ÉQUIPÉ D'UN DISPOSITIF DE COMMANDE DE FCW

(30) Priority: 26.09.2019 JP 2019175786
(43) Date of publication of application: 15.06.2022
(73) Proprietor: Yamaha Hatsudoki Kabushiki Kaisha, Iwata-shi, Shizuoka 438-8501 (JP)
(72) Inventor: KISHI, Tomoaki, Iwata-shi, Shizuoka 438-8501 (JP); KOBAYASHI, Hiroshi, Iwata-shi, Shizuoka 438-8501 (JP); YASUKAWA, Risa, Iwata-shi, Shizuoka 438-8501 (JP); TORIGOE, Hoshimi, Iwata-shi, Shizuoka 438-8501 (JP)
(74) Representative: Stöckeler, Ferdinand
(86) International application number: PCT/JP2020/036143
(87) International publication number: WO 2021/060420

(56) References cited:
- EP-A1- 3 335 954
- WO-A1-2017/030132
- WO-A1-2018/216308
- WO-A1-2018/229567
- JP-A- 2016 034 819
- JP-A- 2018 197 071
- US-A1- 2017 144 665
- US-A1- 2017 162 053
- US-A1- 2019 139 329

## Description

### [Technical Field]

The present teaching relates to a leaning vehicle including an FCW control device which is mounted on a leaning vehicle body frame leaning rightward in a vehicle left-right direction when turning right and leaning leftward in the vehicle left-right direction when turning left and is configured to output an FCW based on a margin obtained based on the relationship between an obstacle and the leaning vehicle. FCW is an abbreviation of Forward Collision Warning.

### [Background Art]

A leaning vehicle including an FCW control device configured to output an FCW based on a margin obtained based on the relationship between an obstacle and the leaning vehicle has been proposed. The leaning vehicle is a vehicle which includes a leaning vehicle body frame which leans rightward in the vehicle left-right direction when turning right and leans leftward vehicle left-right direction when turning left. The leaning vehicle is, for example, a motorcycle.

For example, an FCW control device of a leaning vehicle recited in Patent Literature 1 is mounted on a leaning vehicle body frame which leans rightward in the vehicle left-right direction when turning right and leans leftward in the vehicle left-right direction when turning left. The FCW control device of Patent Literature 1 sets a zone at a location ahead of the leaning vehicle, based on the relationship between an obstacle and the leaning vehicle. The FCW control device of Patent Literature 1 outputs the FCW when the leaning vehicle is in the zone.

US 2017/144665 A1 discloses a saddled vehicle driven by a driver and including a detection device and a cruise control device for judging other vehicles detected by the detection device and traveling in a same traffic lane as the own vehicle's traffic lane as a preceding vehicle. Travel of the vehicle driven by the driver is automatically controlled so that the vehicle driven by the driver follows the preceding vehicle and keeps a preset intervehicular distance relative to the preceding vehicle. The cruise control device can obtain a forward intervehicular distance which is a distance from the vehicle driven by the driver to the preceding vehicle in a traveling direction and a side intervehicular distance which is a distance from the vehicle driven by the driver to the preceding vehicle in a vehicle width direction and can perform the automatic travel control of the vehicle driven by the driver in accordance with the forward intervehicular distance and the side intervehicular distance.

### [Citation List]

### [Patent Literatures]

[Patent Literature 1] Japanese Unexamined Patent Publication No. 2009-116882

### [Summary]

### [Technical Problem]

The leaning vehicle with the FCW control device disclosed in Patent Literature 1 is required to have a higher degree of freedom in designing the hardware resource of the FCW control device.

An object of the present teaching is to provide a leaning vehicle with an FCW control device, in which the degree of freedom in designing the hardware resource such as a processor and a memory of the FCW control device can be improved.

### [Solution to Problem]

A leaning vehicle including an FCW control device of an embodiment of the present teaching has the following structures. The leaning vehicle includes an FCW control device which is mounted on a leaning vehicle body frame which is configured to lean in a vehicle rightward direction when turning right and leans in a vehicle leftward direction when turning left, the FCW control device being configured to output an FCW based on a margin acquired based on relationship between an obstacle and the leaning vehicle. The margin acquired based on relationship between an obstacle and the leaning vehicle is a margin when a rider deals with the obstacle. The leaning vehicle comprises at least one of a front sensor configured to detect an object ahead of the leaning vehicle or a vehicle-to-vehicle communication apparatus configured to receive, from another vehicle, a signal related to location information of the other vehicle. The FCW control device is configured to acquire the margin based on the relationship between the obstacle and the leaning vehicle with reference to information acquired by at least one of the front sensor or the vehicle-to-vehicle communication apparatus. The FCW control device is configured to perform control to establish a relationship 1, a relationship 2, and a relationship 3:
the relationship 1: while the leaning vehicle is moving straight toward the stationary obstacle at a first vehicle speed, when the distance between the leaning vehicle and the obstacle in a traveling direction of the leaning vehicle gradually decreases and becomes equal to a first distance, the FCW control device outputs the FCW;
the relationship 2: when (i) the leaning vehicle moves straight toward the stationary obstacle, (ii) a brake lever is being operated in a pulling direction or in a releasing direction by a hand of a rider while the leaning vehicle runs from a first point where the distance between the leaning vehicle and the obstacle in the traveling direction of the leaning vehicle is longer than the first distance to a third point where the distance between the leaning vehicle and the obstacle in the traveling direction of the leaning vehicle is shorter than the first distance, (iii) the FCW is not output until the leaning vehicle reaches a second point where the distance between the leaning vehicle and the obstacle in the traveling direction of the leaning vehicle is equal to the first distance, and (iv) vehicle speed of the leaning vehicle at the second point is equal to the first vehicle speed, the FCW control device does not output the FCW at least while the leaning vehicle runs from the second point to the third point; and
the relationship 3: when, (I) after the leaning vehicle moves straight on a first linear line toward the stationary obstacle, the traveling direction of the leaning vehicle is changed to a direction toward a second linear line which is in parallel to the first linear line and is separated from the first linear line by a distance shorter than the overall length of the leaning vehicle, and then the leaning vehicle moves straight on the second linear line toward the stationary obstacle, (II) while the leaning vehicle runs from a fourth point where the distance between the leaning vehicle and the obstacle in the traveling direction of the leaning vehicle is longer than the first distance to a sixth point where the distance between the leaning vehicle and the obstacle in the traveling direction of the leaning vehicle is shorter than the first distance, the rider is changing inclination of the leaning vehicle body frame in a vehicle left-right direction by making an input to the leaning vehicle, (III) the FCW is not output until the leaning vehicle reaches a fifth point where the distance between the leaning vehicle and the obstacle in the traveling direction of the leaning vehicle is equal to the first distance, and (IV) the vehicle speed of the leaning vehicle at the fifth point is equal to the first vehicle speed, the FCW control device does not output the FCW at least while the leaning vehicle runs from the fifth point to the sixth point.

A leaning vehicle including an FCW control device of an embodiment of the present teaching may have the following structure. The FCW control device is configured to perform control to establish a relationship 4 and a relationship 5: the relationship 4: when (i) the leaning vehicle moves straight toward the stationary obstacle, (ii) the brake lever is being operated in the pulling direction or in the releasing direction by the hand of the rider while the leaning vehicle runs from the first point where the distance between the leaning vehicle and the obstacle in the traveling direction of the leaning vehicle is longer than the first distance to the third point where the distance between the leaning vehicle and the obstacle in the traveling direction of the leaning vehicle is shorter than the first distance, (iii) an amount of change per time period of an operation amount of the brake lever is equal to or more than a first brake lever changing amount while the leaning vehicle runs from the first point to the third point, (iv) the FCW is not output until the leaning vehicle reaches the second point where the distance between the leaning vehicle and the obstacle in the traveling direction of the leaning vehicle is equal to the first distance, and (v) the vehicle speed of the leaning vehicle at the second point is equal to the first vehicle speed, the FCW control device does not output the FCW at least while the leaning vehicle runs from the second point to the third point; and
the relationship 5: when (I) the leaning vehicle moves straight toward the stationary obstacle, (II) the brake lever is being operated in the pulling direction or in the releasing direction by the hand of the rider while the leaning vehicle runs from the first point where the distance between the leaning vehicle and the obstacle in the traveling direction of the leaning vehicle is longer than the first distance to the third point where the distance between the leaning vehicle and the obstacle in the traveling direction of the leaning vehicle is shorter than the first distance, (III) the amount of change per time period of the operation amount of the brake lever is more than zero and less than the first brake lever changing amount while the leaning vehicle runs from the first point to the third point, (IV) the FCW is not output until the leaning vehicle reaches the second point where the distance between the leaning vehicle and the obstacle in the traveling direction of the leaning vehicle is equal to the first distance, and (V) the vehicle speed of the leaning vehicle at the second point is equal to the first vehicle speed, the FCW control device is outputting the FCW at least while the leaning vehicle runs from the second point to the third point.

A leaning vehicle including an FCW control device of an embodiment of the present teaching may have the following structure. The FCW control device is configured to perform control to establish a relationship 6 and a relationship 7: the relationship 6: when, (i) after the leaning vehicle moves straight on the first linear line toward the stationary obstacle, the traveling direction of the leaning vehicle is changed to a direction toward the second linear line, and then the leaning vehicle moves straight on the second linear line toward the stationary obstacle, (ii) while the leaning vehicle runs from the fourth point where the distance between the leaning vehicle and the obstacle in the traveling direction of the leaning vehicle is longer than the first distance to the sixth point where the distance between the leaning vehicle and the obstacle in the traveling direction of the leaning vehicle is shorter than the first distance, the rider is changing the inclination of the leaning vehicle body frame in the vehicle left-right direction by making an input made to the leaning vehicle, (iii) the amount of change per time period of the inclination in the vehicle left-right direction of the leaning vehicle body frame while the leaning vehicle runs from the fourth point to the sixth point is equal to or more than a first inclination changing amount, (iv) the FCW is not output until the leaning vehicle reaches the fifth point where the distance between the leaning vehicle and the obstacle in the traveling direction of the leaning vehicle is equal to the first distance, and (v) the vehicle speed of the leaning vehicle at the fifth point is equal to the first vehicle speed, the FCW control device does not output the FCW at least while the leaning vehicle runs from the fifth point to the sixth point; and
the relationship 7: when, (I) after the leaning vehicle moves straight on the first linear line toward the stationary obstacle, the traveling direction of the leaning vehicle is changed to a direction toward the second linear line, and then the leaning vehicle moves straight on the second linear line toward the stationary obstacle, (II) the FCW is not output until the leaning vehicle reaches the fifth point where the distance between the leaning vehicle and the obstacle in the traveling direction of the leaning vehicle is equal to the first distance, and (III) while the leaning vehicle runs from the fourth point where the distance between the leaning vehicle and the obstacle in the traveling direction of the leaning vehicle is longer than the first distance to the sixth point where the distance between the leaning vehicle and the obstacle in the traveling direction of the leaning vehicle is shorter than the first distance, the rider is changing the inclination of the leaning vehicle body frame in the vehicle left-right direction by making an input made to the leaning vehicle, (IV) the amount of change per time period of the inclination in the vehicle left-right direction of the leaning vehicle body frame while the leaning vehicle runs from the fourth point to the sixth point is more than zero and less than the first inclination changing amount, and (V) the vehicle speed of the leaning vehicle at the fifth point is equal to the first vehicle speed, the FCW control device is outputting the FCW at least while the leaning vehicle runs from the fifth point to the sixth point.

A leaning vehicle including an FCW control device of an embodiment of the present teaching may have the following structure. The FCW control device is configured to perform control to establish a relationship 8 and a relationship 9: the relationship 8: while the leaning vehicle is moving straight toward the stationary obstacle at the second vehicle speed that is lower than the first vehicle speed, when the distance between the leaning vehicle and the obstacle in the traveling direction of the leaning vehicle gradually decreases and becomes equal to the second distance that is shorter than the first distance, the FCW control device outputs the FCW; and
the relationship 9: after the leaning vehicle passes through the third point in the relationship 2 and while the leaning vehicle is running straight from a seventh point where the distance between the obstacle and the leaning vehicle in the traveling direction of the leaning vehicle is shorter than the second distance to an eighth point toward the stationary obstacle, when the operation amount of the brake lever is zero and the vehicle speed of the leaning vehicle is equal to or higher than the second vehicle speed, the FCW control device outputs the FCW at least at the eighth point.

A leaning vehicle including an FCW control device of an embodiment of the present teaching may have the following structure. The FCW control device is configured to perform control to establish a relationship 8 and a relationship 10:
the relationship 8: while the leaning vehicle is moving straight toward the stationary obstacle at the second vehicle speed that is lower than the first vehicle speed, when the distance between the leaning vehicle and the obstacle in the traveling direction of the leaning vehicle gradually decreases and becomes equal to the second distance that is shorter than the first distance, the FCW control device outputs the FCW; and
the relationship 10: after the leaning vehicle passes through the sixth point in the relationship 3 and while the leaning vehicle is running straight on the second linear line from a ninth point where the distance between the obstacle and the leaning vehicle in the traveling direction of the leaning vehicle is shorter than the second distance to a tenth point toward the stationary obstacle, when the inclination in the vehicle left-right direction of the leaning vehicle body frame is unchanged and the vehicle speed of the leaning vehicle is equal to or higher than the second vehicle speed, the FCW control device outputs the FCW at least at the tenth point.

A leaning vehicle including an FCW control device of an embodiment of the present teaching may have the following structure. The FCW control device is configured to perform control to establish a relationship 11 and a relationship 12:
the relationship 11: when the leaning vehicle moves straight toward the stationary obstacle, the FCW control device continues the output of the FCW irrespective of an operation state of the brake lever while the FCW is output; and
the relationship 12: when, after the leaning vehicle moves straight on the first linear line toward the stationary obstacle, the traveling direction of the leaning vehicle is changed to a direction toward the second linear line, and then the leaning vehicle moves straight on the second linear line toward the stationary obstacle, the FCW control device continues the output of the FCW irrespective of a change in the inclination in the vehicle left-right direction of the leaning vehicle body frame while the FCW is output.

A leaning vehicle including an FCW control device of an embodiment of the present teaching may have the following structure. The FCW control device is configured to perform control to establish a relationship 13 and a relationship 14:
the relationship 13: while the leaning vehicle runs straight at constant speed so that the distance in the vehicle left-right direction between the obstacle and the leaning vehicle is equal to a first left-right direction distance, the FCW control device does not output the FCW irrespective of the distance between the obstacle and the leaning vehicle in the traveling direction of the leaning vehicle; and
the relationship 14: when (i) the leaning vehicle moves straight on a third linear line, (ii) at a first time point at which the distance between the obstacle and the leaning vehicle in the traveling direction of the leaning vehicle becomes equal to a third distance that is shorter than the first distance, the obstacle starts to move in a direction orthogonal to the third linear line toward the third linear line from a position where the distance in the vehicle left-right direction between the obstacle and the leaning vehicle is equal to the first left-right direction distance, (iii) at a second time point, the obstacle locates on the third linear line and the obstacle ends the movement, and (iv) the vehicle speed of the leaning vehicle is equal to or lower than the first vehicle speed while the leaning vehicle runs from the first time point to the second time point, the FCW control device outputs the FCW at least at the second time point irrespective of an operation state of the brake lever.

A leaning vehicle including an FCW control device of an embodiment of the present teaching may have the following structure. The FCW control device is configured to perform control to establish a relationship 13 and a relationship 15:
the relationship 13: while the leaning vehicle runs straight at constant speed so that the distance in the vehicle left-right direction between the obstacle and the leaning vehicle is equal to a first left-right direction distance, the FCW control device does not output the FCW irrespective of the distance between the obstacle and the leaning vehicle in the traveling direction of the leaning vehicle; and
the relationship 15: after the leaning vehicle runs straight at a vehicle speed equal to or higher than the first vehicle speed until the shortest distance between the stationary obstacle and the leaning vehicle becomes equal to a fourth distance that is shorter than the first distance so that the distance in the vehicle left-right direction between the stationary obstacle and the leaning vehicle is maintained at the first left-right direction distance, when the traveling direction of the leaning vehicle is changed and the leaning vehicle runs toward the stationary obstacle at a vehicle speed equal to or higher than the first vehicle speed, the FCW control device outputs the FCW irrespective of a change in the inclination in the vehicle left-right direction of the leaning vehicle body frame.

A leaning vehicle including an FCW control device of an embodiment of the present teaching may have the following structure. The leaning vehicle includes: a brake lever operation amount related sensor configured to detect a physical quantity related to the operation amount of the brake lever operated by the hand of the rider; and a vehicle body inclination sensor configured to detect a physical quantity related to the inclination in the vehicle left-right direction of the leaning vehicle body frame, the FCW control device being configured to control the output of the FCW based on detection results of the brake lever operation amount related sensor and the vehicle body inclination sensor and the margin acquired based on the relationship between the obstacle and the leaning vehicle.

A leaning vehicle including an FCW control device of an embodiment of the present teaching may have the following structure. The leaning vehicle includes at least one of a front sensor configured to detect an object ahead of the leaning vehicle or a vehicle-to-vehicle communication apparatus configured to receive, from another vehicle, a signal related to location information of the other vehicle, the FCW control device being configured to acquire the margin based on the relationship between the obstacle and the leaning vehicle, with reference to information acquired by at least one of the front sensor or the vehicle-to-vehicle communication apparatus.

A leaning vehicle including an FCW control device of an embodiment of the present teaching may have the following structure. The FCW control device has a function of at least one of an EBA or an AEB.

A leaning vehicle including an FCW control device of an embodiment of the present teaching may have the following structure. When the FCW control device has the function of the EBA, the FCW control device is configured to activate the EBA while outputting the FCW. When the FCW control device has the function of the AEB, the FCW control device is configured to activate the AEB while outputting the FCW.

A leaning vehicle including an FCW control device of an embodiment of the present teaching may have the following structure. When the FCW control device has the function of the EBA, the FCW control device is configured to perform control to establish a relationship 16 and a relationship 18, and when the FCW control device has the function of the AEB, the FCW control device is configured to perform control to establish a relationship 17 and a relationship 19:
the relationship 16: when (i) the leaning vehicle moves straight toward the stationary obstacle, (ii) the vehicle speed of the leaning vehicle is equal to the first vehicle speed at the second point where the distance between the leaning vehicle and the obstacle in the traveling direction of the leaning vehicle is equal to the first distance, (iii) the FCW starts to be output when the leaning vehicle reaches the second point, (iv) the EBA is not activated until the leaning vehicle reaches an eleventh point where the distance between the leaning vehicle and the obstacle in the traveling direction of the leaning vehicle is equal to a fifth distance that is shorter than the first distance, (v) the operation amount of the brake lever is more than zero while the leaning vehicle runs from the eleventh point to a twelfth point, and (vi) the vehicle speed of the leaning vehicle at the eleventh point is equal to a third vehicle speed that is lower than the first vehicle speed, the FCW control device continues the EBA at least while the leaning vehicle runs from the eleventh point to the twelfth point;
the relationship 17: when (I) the leaning vehicle moves straight toward the stationary obstacle, (II) the vehicle speed of the leaning vehicle is equal to the first vehicle speed at the second point where the distance between the leaning vehicle and the obstacle in the traveling direction of the leaning vehicle is equal to the first distance, (III) the FCW starts to be output when the leaning vehicle reaches the second point, (IV) the AEB is not activated until the leaning vehicle reaches a thirteenth point where the distance between the leaning vehicle and the obstacle in the traveling direction of the leaning vehicle is equal to a sixth distance that is shorter than the first distance, and (V) the vehicle speed of the leaning vehicle at the thirteenth point is equal to a fourth vehicle speed, the FCW control device activates the AEB when the leaning vehicle reaches the thirteenth point;
the relationship 18: when, (a) after the leaning vehicle moves straight on the first linear line toward the stationary obstacle, the traveling direction of the leaning vehicle is changed to a direction toward the second linear line, and then the leaning vehicle moves straight on the second linear line toward the stationary obstacle, (b) the vehicle speed of the leaning vehicle is equal to the first vehicle speed at a fourteenth point on the first linear line where the distance between the leaning vehicle and the obstacle in the traveling direction of the leaning vehicle is equal to the first distance, (c) the FCW starts to be output when the leaning vehicle reaches the fourteenth point, (d) the EBA is not activated until the leaning vehicle reaches a sixteenth point where the distance between the leaning vehicle and the obstacle in the traveling direction of the leaning vehicle is equal to the fifth distance, (e) while the leaning vehicle runs from a fifteenth point where the distance between the leaning vehicle and the obstacle in the traveling direction of the leaning vehicle is longer than the fifth distance to a seventeenth point where the distance between the leaning vehicle and the obstacle in the traveling direction of the leaning vehicle is shorter than the fifth distance, the rider is changing the inclination of the leaning vehicle body frame in the vehicle left-right direction by making an input made to the leaning vehicle, (f) the operation amount of the brake lever is more than zero while the leaning vehicle runs from the sixteenth point to the seventeenth point, and (g) the vehicle speed of the leaning vehicle at the sixteenth point is equal to the third vehicle speed, the FCW control device does not activate the EBA at least while the leaning vehicle runs from the sixteenth point to the seventeenth point; and
the relationship 19: when, (A) after the leaning vehicle moves straight on the first linear line toward the stationary obstacle, the traveling direction of the leaning vehicle is changed to a direction toward the second linear line, and then the leaning vehicle moves straight on the second linear line toward the stationary obstacle, (B) the vehicle speed of the leaning vehicle is equal to the first vehicle speed at the fourteenth point on the first linear line where the distance between the leaning vehicle and the obstacle in the traveling direction of the leaning vehicle is equal to the first distance, (C) the FCW starts to be output when the leaning vehicle reaches the fourteenth point, (D) the AEB is not activated until the leaning vehicle reaches a nineteenth point where the distance between the leaning vehicle and the obstacle in the traveling direction of the leaning vehicle is equal to the sixth distance, (E) while the leaning vehicle runs from an eighteenth point where the distance between the leaning vehicle and the obstacle in the traveling direction of the leaning vehicle is longer than the sixth distance to a twentieth point where the distance between the leaning vehicle and the obstacle in the traveling direction of the leaning vehicle is shorter than the sixth distance, the rider is changing the inclination of the leaning vehicle body frame in the vehicle left-right direction by making an input made to the leaning vehicle, and (F) the vehicle speed of the leaning vehicle at the nineteenth point is equal to the fourth vehicle speed, the FCW control device does not activate the AEB at least while the leaning vehicle runs from the nineteenth point to the twentieth point.

### [Advantageous Effects]

A leaning vehicle is a vehicle that turns using a balance between centrifugal force and gravity. When turning right, the rider leans the leaning vehicle body frame rightward in the vehicle left-right direction. When turning left, the rider leans the leaning vehicle body frame leftward in the vehicle left-right direction. The rider changes the inclination in the vehicle left-right direction of the leaning vehicle body frame by an input to the leaning vehicle. On this account, when the rider is changing the inclination in the vehicle left-right direction of the leaning vehicle body frame, the rider highly concentrates on the driving task. Furthermore, the brake lever of the leaning vehicle needs subtle operations. On this account, when the hand of the rider is operating the brake lever in the pulling direction or in the releasing direction, the rider highly concentrates on the driving task. When the rider highly concentrates on the driving task, the rider is paying attention to the surroundings. On this account, when the hand of the rider is operating the brake lever in the pulling direction or in the releasing direction or when the rider is changing the inclination in the vehicle left-right direction of the leaning vehicle body frame, the rider is paying attention to the surroundings.

The FCW control device outputs an FCW based on a margin acquired based on the relationship between an obstacle ahead of the leaning vehicle and the leaning vehicle. The FCW control device performs control to establish the relationship 2. In this case, the FCW control device does not output the FCW while the brake lever is operated in the pulling direction or in the releasing direction by the hand of the rider. The FCW control device performs control to establish the relationship 3. In this case, the FCW control device does not output the FCW while the rider is changing the inclination in the vehicle left-right direction of the leaning vehicle body frame by an input to the leaning vehicle. The FCW is output to notify the rider that the leaning vehicle is approaching the obstacle and an operation by the rider is needed. When the hand of the rider is operating the brake lever in the pulling direction or in the releasing direction or when the rider is changing the inclination in the vehicle left-right direction of the leaning vehicle body frame, the rider does not need the output of the FCW because he/she is paying attention to the surroundings.

When the hand of the rider is operating the brake lever leaning vehicle in the pulling direction or in the releasing direction or when the rider is changing the inclination in the vehicle left-right direction of the leaning vehicle body frame, it is difficult to determine whether a further operation by the rider is needed, because the rider is operating the leaning vehicle. In other words, it is difficult to determine whether to output the FCW. Even when the hand of the rider is operating the brake lever in the pulling direction or in the releasing direction or the rider is changing the inclination in the vehicle left-right direction of the leaning vehicle body frame, it is necessary to use a lot of types of data for the determination as in the FCW control device of Patent Literature 1 or to improve the detection accuracy of data used for the determination, in order to accurately determine whether an operation by the rider is needed. Therefore, because the FCW is not output when the hand of the rider is operating the brake lever in the pulling direction or in the releasing direction or when the rider is changing the inclination in the vehicle left-right direction of the leaning vehicle body frame, it is possible to decrease the number of types of data used for determining whether to output the FCW and to decrease the detection accuracy of data used for determining whether to output the FCW. Therefore, it is possible to use hardware resource having a small processing capability or memory capacity. As a result, the degree of freedom in designing the hardware resource of the FCW control device can be improved.

### [Leaning Vehicle]

A leaning vehicle of the present teaching and the embodiments includes at least one front wheel and at least one rear wheel. The leaning vehicle may include two front wheels and one or two rear wheels. The leaning vehicle may include one front wheel and one or two rear wheels. In the leaning vehicle, either the front wheel or the rear wheel may be steered. The leaning vehicle of the present teaching and the embodiments includes a driving source. The driving source may be an engine, a motor driven by electricity, or a hybrid driving source including both an engine and a motor. A leaning vehicle body frame of the leaning vehicle is a member which mainly receives stress in the leaning vehicle. The leaning vehicle body frame may be a frame formed by combining a plurality of components, or may be an integrally-molded frame.

### [FCW Control Device]

In the present teaching and the embodiments, to output an FCW by the FCW control device indicates not to run a program of the FCW control device but to execute a process of causing a rider to recognize the FCW. When the FCW control device does not output an FCW, a process of causing a rider to recognize the FCW is not executed. When the FCW control device does not output an FCW, a program of the FCW control device may or may not run.

An obstacle in relationships 2 to 19 of the present teaching and the embodiments is stationary or moves only in a direction orthogonal to the traveling direction of the leaning vehicle. However, an obstacle based on which the FCW control device of the present teaching and the embodiments outputs an FCW is not limited to this arrangement. The FCW control device of the present teaching and the embodiments outputs an FCW based also on a margin acquired based on the relationship between the leaning vehicle and an obstacle moving in the same direction as the traveling direction of the leaning vehicle.

In the present teaching and the embodiments, a state in which the FCW control device does not output an FCW is not limited to those described in the present teaching and the embodiments. For example, the FCW control device may perform control so that an operation "a brake lever is operated in a pulling direction or a releasing direction by a hand of a rider" in a relationship 2 of the present teaching and the embodiments is replaced with an operation "a brake pedal is pushed by a foot of a rider". Furthermore, for example, the FCW control device may perform control so that the operation "a brake lever is operated in a pulling direction or a releasing direction by a hand of a rider" in the relationship 2 is replaced with an operation "an accelerator grip is rotated by a hand of a rider to increase or decrease the opening degree of a throttle valve". Furthermore, for example, the FCW control device may perform control so that the operation "a brake lever is operated in a pulling direction or a releasing direction by a hand of a rider" in the relationship 2 is replaced with an operation "a brake lever is operated in a pulling direction or a loosening direction or is maintained in a pulled state by a hand of a rider".

### [Notification Device]

The FCW control device of the present teaching and the embodiments is electrically connected to a notification device which is configured to give a notification to a rider. The FCW control device is configured to output an FCW by controlling the notification device. The notification device sends at least one of an audio notification, a visual notification, a tactile notification, or an olfactory notification to a rider. The notification device may send a notification by combining at least two of a visual notification, an audio notification, a tactile notification, and an olfactory notification. The audio notification is a notification by sound. Sound for notification may be simple sound generated by an electromagnetic buzzer, melody, or artificial voice. The visual notification is a notification by light, for example. The tactile notification is a notification by vibration, for example. For example, a grip or a seat may vibrate. Means for generating vibration may be means dedicated to the notification device, a brake, or a drive source. The vibration may be a single motion, or may be successive or intermittent motions. The vibration may or may not be periodical.

### [Margin-Related Sensor]

The FCW control device of the present teaching and the embodiments is electrically connected to a margin-related sensor which is required to acquire a margin that is acquired based on the relationship between an obstacle and a leaning vehicle. The FCW control device acquires a margin based on the relationship between the obstacle and the leaning vehicle, with reference to information acquired by the margin-related sensor. The margin-related sensor may be at least one of a front sensor or a vehicle-to-vehicle communication apparatus. The front sensor is configured to detect an object ahead of the leaning vehicle. The front sensor is, for example, a camera taking images ahead of the leaning vehicle, a millimeter wave radar, a LIDAR, or a combination of these devices. The vehicle-to-vehicle communication apparatus is configured to receive, from another vehicle, a signal related to location information of the other vehicle.

### [Margin Acquired Based on Relationship between Obstacle And Leaning Vehicle]

In the present teaching and the embodiments, a margin acquired based on the relationship between an obstacle and a leaning vehicle is a margin when a rider deals with the obstacle. The margin is acquired based on the relative speed between the obstacle and the leaning vehicle, for example. The margin is information such as a numerical value and the magnitude of an analog signal. When the margin is higher than a reference value, there is a margin in comparison with the reference value. The reference value may be set in advance in accordance with each type of the leaning vehicles. The margin may be corrected or learned based on signals obtained by various types of sensors. The margin may be information directly indicating the margin or information indirectly indicating the margin such as information correlated with the margin. Acquisition of a margin indicates acquisition of information directly indicating the margin or acquisition of information indirectly indicating the margin.

### [First Left-Right Direction Distance]

A first left-right direction distance in a relationship 13 of the present teaching and the embodiments is a mere example of a distance with which an FCW is not output. An FCW may not be output when the distance is shorter than the first left-right direction distance.

### [Leaning Vehicle Moves Straight on Linear Line]

In the present teaching and the embodiments, an expression "a leaning vehicle moves straight on a linear line" indicates that, in plan view, a linear line passes through the center in a vehicle left-right direction of a leaning vehicle.

### [Leaning Vehicle Moves Straight toward Obstacle]

In the present teaching and the embodiments, an expression "a leaning vehicle moves straight toward an obstacle" indicates that, in plan view, a leaning vehicle moves straight so that a linear line passing through the center in a vehicle left-right direction of the leaning vehicle overlaps the obstacle.

### [Leaning Vehicle Runs toward Obstacle]

In the present teaching and the embodiments, an expression "a leaning vehicle runs toward an obstacle" indicates that, a leaning vehicle runs so that a linear line that is a line formed by intersection between a flat plane passing through the center in a vehicle width direction of a leaning vehicle body frame and a road surface overlaps the obstacle in plan view. When a leaning vehicle including a front sensor runs toward an obstacle, the front sensor may keep detecting the obstacle.

### (Relationship 3, Relationship 12, Relationship 18, and Relationship 19)

In a relationship 3, a relationship 12, a relationship 18, and a relationship 19 of the present teaching and the embodiments, while a leaning vehicle moves from a first linear line to a second linear line, the leaning vehicle is running toward an obstacle. While the leaning vehicle including a front sensor moves from the first linear line to the second linear line, the front sensor may keep detecting the obstacle.

### [Brake Lever]

The leaning vehicle of the present teaching and the embodiments includes at least one brake lever. The leaning vehicle may have two brake levers operated by right and left hands of a rider. The two brake levers are a brake lever for operating a front brake by which braking force is applied to the front wheel and a brake lever for operating a rear brake by which braking force is applied to the rear wheel. The leaning vehicle may have a brake lever operated by the hand of the rider and a brake pedal operated by a foot of the rider. In this case, the brake lever is a brake lever for operating the front brake. The brake lever for operating the front brake may be arranged to be able to operate the rear brake. The brake lever for operating the rear brake may be arranged to be able to operate the front brake.

When the leaning vehicle has two brake levers, a brake lever of the relationship 2 of the present teaching and the embodiments may be either of the two brake levers. Each of brake levers of the relationships 4, 5, 9, 11, 14, 16, and 18 of the present teaching and the embodiments may be either of the two brake levers as long as the brake lever satisfies the relationship 2. It is noted that the brake lever of the relationship 4 is identical with the brake lever of the relationship 5. When the leaning vehicle has two brake levers, the brake levers of the relationships 2, 4, 5, 9, 11, 14, 16, and 18 of the present teaching and the embodiments may be the same. The brake levers of the relationships 2, 4, 5, 9, 11, 14, 16, and 18 may be brake levers for operating the front brake or brake levers for operating the rear brake.

### [Operation Amount of Brake Lever]

An operation amount of a brake lever of the present teaching and the embodiments may be a physical quantity directly indicating the operation amount of the brake lever or a physical quantity indirectly indicating the same. The physical quantity indirectly indicating the operation amount of the brake lever may be a physical quantity correlated to a brake operation amount. When the leaning vehicle has two brake levers, an operation amount of a brake lever of the present teaching and the embodiments is an operation amount of either of the two brake levers.

In the present teaching and the embodiments, an expression "an amount of change of an operation amount of a brake lever per time period while a leaning vehicle runs from a first point to a third point is equal to or more than a first brake lever changing amount" indicates one of the following two cases. In the first case, a value calculated by dividing the amount of change of the operation amount of the brake lever while the leaning vehicle runs from the first point to the third point by a running time of the leaning vehicle running from the first point to the third point is equal to or more than the first brake lever changing amount. In the second case, the amount of change of the operation amount of the brake lever per a predetermined period of time during a period of time in which the leaning vehicle runs from the first point to the third point is equal to or more than the first brake lever changing amount. In this case, the amount of change of the operation amount of the brake lever per the predetermined period of time during the period of time in which the leaning vehicle runs from the first point to the third point may be constant or varied. The amount of change of the operation amount of the brake lever per time period may be a time differential value of the operation amount of the brake lever.

### [Brake Lever Operation Amount Related Sensor]

A brake lever operation amount related sensor of the present teaching and the embodiments is a sensor configured to detect a physical quantity related to an operation amount of a brake lever. The brake lever operation amount related sensor may be, for example, a hydraulic pressure sensor configured to detect a hydraulic pressure generated by an operation of a brake lever. The physical quantity related to the operation amount of the brake lever may be a physical quantity directly or indirectly indicating the physical quantity related to the operation amount of the brake lever.

### [Input to Leaning Vehicle by Rider]

In the present teaching and the embodiments, an input by a rider to a leaning vehicle to change the inclination of a leaning vehicle body frame in a vehicle left-right direction encompasses a change of the posture of the rider, an operation of a steering operator (handle) for steering the front wheel, an operation of an accelerator grip in a state in which the leaning vehicle body frame leans in the vehicle left-right direction, and an operation of a brake operator in a state in which the leaning vehicle body frame leans in the vehicle left-right direction. The brake operator may encompass not only the brake lever but also the brake pedal. For example, when the accelerator grip or the brake operator is operated to apply negative driving force or braking force to the rear wheel in the state in which the leaning vehicle body frame leans in the vehicle left-right direction, the inclination of the leaning vehicle body frame increases. When the brake operator is operated to apply braking force to the front wheel, the inclination of the leaning vehicle body frame is decreased. When the accelerator grip is operated to apply positive driving force to the rear wheel, the inclination of the leaning vehicle body frame is decreased, too.

### [Inclination in Vehicle Left-Right Direction of Leaning Vehicle Body Frame]

In the present teaching and the embodiments, inclination in the vehicle left-right direction of the leaning vehicle body frame indicates rightward or leftward inclination in the vehicle left-right direction of the leaning vehicle body frame relative to the vertical direction. The inclination in the vehicle left-right direction of the leaning vehicle body frame may or may not be so-called rotation of the leaning vehicle body frame about a roll axis.

In the present teaching and the embodiments, an expression "an amount of change per time period of inclination in a vehicle left-right direction of a leaning vehicle body frame while a leaning vehicle runs from a fourth point to a sixth point is equal to or more than a first inclination changing amount" indicates either of the following two cases. In the first case, a value calculated by dividing the amount of change of the inclination while the leaning vehicle runs from the fourth point to the sixth point by a running time of the leaning vehicle running from the fourth point to the sixth point is equal to or more than the first inclination changing amount. In the second case, the amount of change of the inclination per a predetermined period of time during a period of time in which the leaning vehicle runs from the fourth point to the sixth point is equal to or more than the first inclination changing amount. In this case, the amount of change of the inclination per the predetermined period of time during the period of time in which the leaning vehicle runs from the fourth point to the sixth point may be constant or varied. The amount of change per time period of the inclination in the vehicle left-right direction of the leaning vehicle body frame may be a roll rate, for example.

### [Vehicle Body Inclination Sensor]

A vehicle body inclination sensor of the present teaching and the embodiments is a sensor configured to detect information related to inclination of a leaning vehicle body frame. Examples of the vehicle body inclination sensor include an IMU (Inertial Measurement Unit), a sensor configured to detect a steering angle or a steering torque, a GPS (Global Positioning System), and a camera for obtaining an image. The vehicle body inclination sensor may be a combination of these sensors. A physical quantity related to the inclination of the leaning vehicle body frame may be a physical quantity directly or indirectly indicating the physical quantity related to the inclination of the leaning vehicle body frame. The physical quantity indirectly indicating the physical quantity related to the inclination of the leaning vehicle body frame may be a steering angle, for example.

### [Function of EBA and Function of AEB]

A function of an EBA of the present teaching and the embodiments is a function of controlling assisting braking force based on a margin acquired based on the relationship between an obstacle and a leaning vehicle and a brake operation by a rider. The brake operation may encompass not only an operation of the brake lever but also an operation of the brake pedal. The assisting braking force is a type of braking force and is increased or decreased under the control of the FCW control device having the function of the EBA. EBA is an abbreviation of Emergency Brake Assist. A function of an AEB in the present teaching and the embodiments is a function of automatically controlling braking force without depending on a brake operation, based on a margin acquired based on the relationship between an obstacle and a leaning vehicle. AEB is an abbreviation of Autonomous Emergency Braking. The FCW control device having the function of the EBA may have the functions of both of the EBA and the AEB. The FCW control device having the function of the AEB may have the functions of both of the EBA and the AEB. In the present teaching and the embodiments, activation of the EBA indicates generation of assisting braking force. In the present teaching and the embodiments, activation of the AEB indicates automatic generation of braking force. What is meant by an expression "the FCW control device activates the AEB" is identical with the foregoing explanation of what is meant by "the FCW control device outputs the FCW", except that the FCW is replaced with the AEB. What is meant by an expression "the FCW control device activates the EBA" is identical with the foregoing explanation of what is meant by "the FCW control device outputs the FCW", except that the FCW is replaced with the EBA. The control device having the EBA function may have a function of the antilock braking system (ABS). In this case, the control device having the EBA function may be electrically connected to a sensor capable of detecting a slipping state of a wheel. The control device having the EBA function may control only braking force applied to the front wheel, for example.

### [Specific Means]

The hardware structures of the FCW control device of the present teaching and the embodiments and of the leaning vehicle including this control device are not detailed in this description. Because the features of the present teaching and the embodiments are technologies related to control, a person with ordinary skill in the art would understand that the leaning vehicle including the FCW control device recited in the present teaching and the embodiments can be embodied by the hardware structures of an FCW control device recited in Patent Literature 1 or another known document and the hardware structures of a leaning vehicle including the FCW control device.

### <Others>

In the present teaching and the embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In addition, in the present teaching and the embodiments, the term "may" is non-exclusive. "May be" means "may be but not limited to". In the present teaching and the embodiments, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment.

### [Brief Description of Drawings]

FIG. 1 outlines a leaning vehicle of First Embodiment of the present teaching.
FIG. 2 outlines leaning vehicles of Second Embodiment and Third Embodiment of the present teaching.
FIG. 3 outlines a leaning vehicle of Fourth Embodiment of the present teaching.
FIG. 4 outlines a leaning vehicle of Fifth Embodiment of the present teaching.
FIG. 5 outlines a leaning vehicle of Sixth Embodiment of the present teaching.
FIG. 6 is a flow chart of an example of a process executed by an FCW control device of a leaning vehicle of Seventh Embodiment of the present teaching.
FIG. 7 outlines leaning vehicles of Eighth Embodiment and Ninth Embodiment of the present teaching.
FIG. 8 outlines a leaning vehicle of Tenth Embodiment of the present teaching.
FIG. 9 outlines a leaning vehicle of Eleventh Embodiment of the present teaching.
FIG. 10 outlines a leaning vehicle of Twelfth Embodiment of the present teaching.
FIG. 11 outlines a leaning vehicle of Thirteenth Embodiment of the present teaching.

### [Description of Embodiments]

### [Reference Symbols in Drawings]

In the drawings, U indicates a direction upward from a leaning vehicle, D indicates a direction downward from the leaning vehicle, L indicates a direction leftward from the leaning vehicle, R indicates a direction rightward from the leaning vehicle, F indicates a direction forward from the leaning vehicle, and Re indicates a direction rearward from the leaning vehicle. Because the drawings mentioned below are all schematic diagrams, the present teaching is not limited by the drawings.

### [First Embodiment]

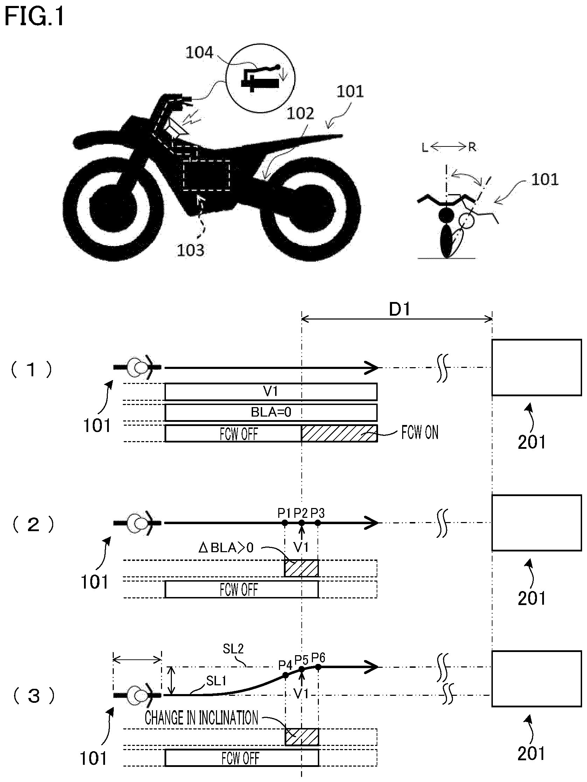

The following will describe a leaning vehicle 101 of First Embodiment of the present teaching with reference to FIG. 1. The leaning vehicle 101 of First Embodiment includes an FCW control device 103 mounted on a leaning vehicle body frame 102 which leans rightward in the vehicle left-right direction when turning right and leans leftward in the vehicle left-right direction when turning left. The FCW control device 103 outputs an FCW based on a margin acquired based on the relationship between an obstacle and the leaning vehicle 101. The FCW control device 103 performs control to establish a relationship 1, a relationship 2, and a relationship 3 described below. (1), (2), and (3) in FIG. 1 indicate examples of the relationship 1, the relationship 2, and the relationship 3, respectively. In the drawing, BLA indicates an operation amount of a brake lever 104, and ΔBLA indicates an amount of change per time period of the operation amount of the brake lever 104.

The relationship 1: While the leaning vehicle 101 is moving straight toward a stationary obstacle 201 at first vehicle speed V1, when the distance between the leaning vehicle 101 and the obstacle 201 in a traveling direction of the leaning vehicle 101 gradually decreases and becomes equal to a first distance D1, the FCW control device 103 outputs the FCW.

The relationship 2: The leaning vehicle 101 is moving straight toward the stationary obstacle 201. The brake lever 104 is operated in a pulling direction or in a releasing direction by a hand of a rider while the leaning vehicle 101 runs from a first point P1 where the distance between the leaning vehicle 101 and the obstacle 201 in the traveling direction of the leaning vehicle 101 is longer than the first distance D1 to a third point P3 where the distance between the leaning vehicle 101 and the obstacle 201 in the traveling direction of the leaning vehicle 101 is shorter than the first distance D1. The FCW is not output until the leaning vehicle 101 reaches a second point P2 where the distance between the leaning vehicle 101 and the obstacle 201 in the traveling direction of the leaning vehicle 101 is equal to the first distance D1, and the vehicle speed of the leaning vehicle 101 at the second point P2 is equal to the first vehicle speed V1. In this case, the FCW control device 103 does not output the FCW at least while the leaning vehicle 101 runs from the second point P2 to the third point P3.

The relationship 3: After the leaning vehicle 101 moves straight on a first linear line SL1 toward the stationary obstacle 201, the traveling direction of the leaning vehicle 101 is changed to a direction toward a second linear line SL2 which is in parallel to the first linear line SL1 and is separated from the first linear line SL1 by a distance shorter than the overall length of the leaning vehicle 101, and then the leaning vehicle 101 moves straight on the second linear line SL2 toward the stationary obstacle 201. The rider is changing the inclination in the vehicle left-right direction of the leaning vehicle body frame 102 by making an input to the leaning vehicle 101 while the leaning vehicle 101 runs from a fourth point P4 where the distance between the leaning vehicle 101 and the obstacle 201 in the traveling direction of the leaning vehicle 101 is longer than the first distance D1 to a sixth point P6 where the distance between the leaning vehicle 101 and the obstacle 201 in the traveling direction of the leaning vehicle 101 is shorter than the first distance D1. The FCW is not output until the leaning vehicle 101 reaches a fifth point P5 where the distance between the leaning vehicle 101 and the obstacle 201 in the traveling direction of the leaning vehicle 101 is equal to the first distance D1, and the vehicle speed of the leaning vehicle 101 at the fifth point P5 is equal to the first vehicle speed V1. In this case, the FCW control device 103 does not output the FCW at least while the leaning vehicle 101 runs from the fifth point P5 to the sixth point P6.

In the relationship 3, the FCW control device 103 may not output the FCW at least while the leaning vehicle 101 runs from the fifth point P5 to the sixth point P6, irrespective of the length of the time from the fifth point P5 to the sixth point P6 (i.e., irrespective of the length of time during which the inclination of the leaning vehicle body frame 102 is changed).

In (3) of FIG. 1, the fifth point P5 is close to the second linear line SL2. In this regard, the fifth point P5 may be a point close to the first linear line SL1. In (3) of FIG. 1, while the leaning vehicle body frame 102 runs from the fourth point P4 to the sixth point P6, the inclination of the leaning vehicle body frame 102 decreases. Alternatively, while the leaning vehicle body frame 102 runs from the fourth point P4 to the sixth point P6, the inclination of the leaning vehicle body frame 102 may increase.

When the hand of the rider is operating the brake lever 104 in the pulling direction or in the releasing direction or when the rider is changing the inclination in the vehicle left-right direction of the leaning vehicle body frame 102, the rider does not need the output of the FCW because he/she is paying attention to the surroundings. Because the FCW is not output when the hand of the rider is operating the brake lever 104 in the pulling direction or in the releasing direction or when the rider is changing the inclination in the vehicle left-right direction of the leaning vehicle body frame 102, it is possible to decrease the number of types of data used for determining whether to output the FCW and to decrease the detection accuracy of data used for determining whether to output the FCW. Therefore, it is possible to use hardware resource having a small processing capability or memory capacity. As a result, the degree of freedom in designing the hardware resource of the FCW control device 103 can be improved.

### [Second Embodiment]

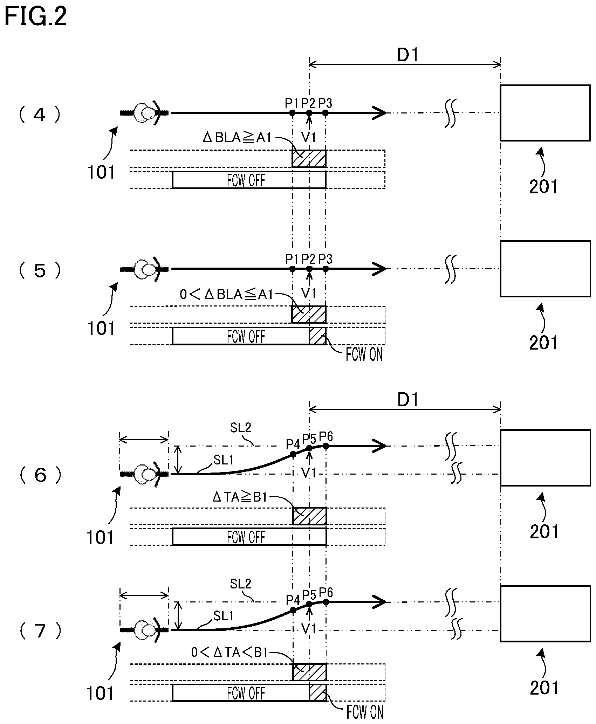

The following will describe a leaning vehicle 101 of Second Embodiment of the present teaching with reference to FIG. 2. The leaning vehicle 101 of Second Embodiment is structurally identical with that of First Embodiment. An FCW control device 103 of Second Embodiment performs control to establish a relationship 4 and a relationship 5 described below. (4), and (5) in FIG. 2 indicate examples of the relationship 4 and the relationship 5, respectively. The relationship 4: A condition "an amount of change ΔBLA per time period of an operation amount of the brake lever 104 while the leaning vehicle 101 runs from the first point P1 to the third point P3 is equal to or more than a first brake lever changing amount A1" is added to the relationship 2. Apart from this, the relationship 4 is identical with the relationship 2.

The relationship 5: A condition "an amount of change ΔBLA per time period of an operation amount of the brake lever 104 while the leaning vehicle 101 runs from the first point P1 to the third point P3 is more than zero and less than the first brake lever changing amount A1" is added to the relationship 2, and the condition "the FCW control device 103 does not output an FCW at least while the leaning vehicle 101 runs from the second point P2 to the third point P3" in the relationship 2 is replaced with a condition "the FCW control device 103 is outputting an FCW at least while the leaning vehicle 101 runs from the second point P2 to the third point P3". Apart from this, the relationship 5 is identical with the relationship 2.

According to Second Embodiment, the FCW control device 103 outputs the FCW when the amount of change ΔBLA per time period of the operation amount of the brake lever 104 is equal to or more than the first brake lever changing amount A1. The larger the amount of change ΔBLA per time period of the operation amount of the brake lever 104 is, the more the rider highly concentrates on the driving task. On this account, when the amount of change ΔBLA per time period of the operation amount of the brake lever 104 is equal to or more than the first brake lever changing amount A1, the rider is further reliably paying attention to the surroundings.

### [Third Embodiment]

The following will describe a leaning vehicle 101 of Third Embodiment of the present teaching with reference to FIG. 2. The leaning vehicle 101 of Third Embodiment is structurally identical with that of First Embodiment. The leaning vehicle 101 of Third Embodiment may or may not be structurally identical with that of Second Embodiment. An FCW control device 103 of Third Embodiment performs control to establish a relationship 6 and a relationship 7 described below. (6), and (7) in FIG. 2 indicate examples of the relationship 6 and the relationship 7, respectively. The relationship 6; A condition "an amount of change ΔTA per time period of inclination in the vehicle left-right direction of the leaning vehicle body frame 102 while the leaning vehicle 101 runs from the fourth point P4 to the sixth point P6 is equal to or more than a first inclination changing amount B1" is added to the relationship 3. Apart from this, the relationship 6 is identical with the relationship 3.

The relationship 7; A condition "an amount of change ΔTA per time period of inclination in the vehicle left-right direction of the leaning vehicle body frame 102 while the leaning vehicle 101 runs from the fourth point P4 to the sixth point P6 is more than zero and less than a first inclination angle changing amount B1" is added to the relationship 3, and the condition "the FCW control device 103 does not output an FCW at least while the leaning vehicle 101 runs from the fifth point P5 to the sixth point P6" in the relationship 3 is replaced with a condition "the FCW control device 103 is outputting the FCW at least while the leaning vehicle 101 runs from the fifth point P5 to the sixth point P6". Apart from this, the relationship 7 is identical with the relationship 3.

According to Third Embodiment, the FCW control device 103 outputs the FCW when the amount of change ΔTA per time period of the inclination in the vehicle left-right direction of the leaning vehicle body frame 102 is equal to or more than the first inclination changing amount B1. The larger the amount of change ΔTA per time period of the inclination in the vehicle left-right direction of the leaning vehicle body frame 102 is, the more the rider highly concentrates on the driving task. On this account, when the amount of change ΔTA per time period of the inclination in the vehicle left-right direction of the leaning vehicle body frame 102 is equal to or more than the first inclination changing amount B1, the rider is further reliably paying attention to the surroundings.

### [Fourth Embodiment]

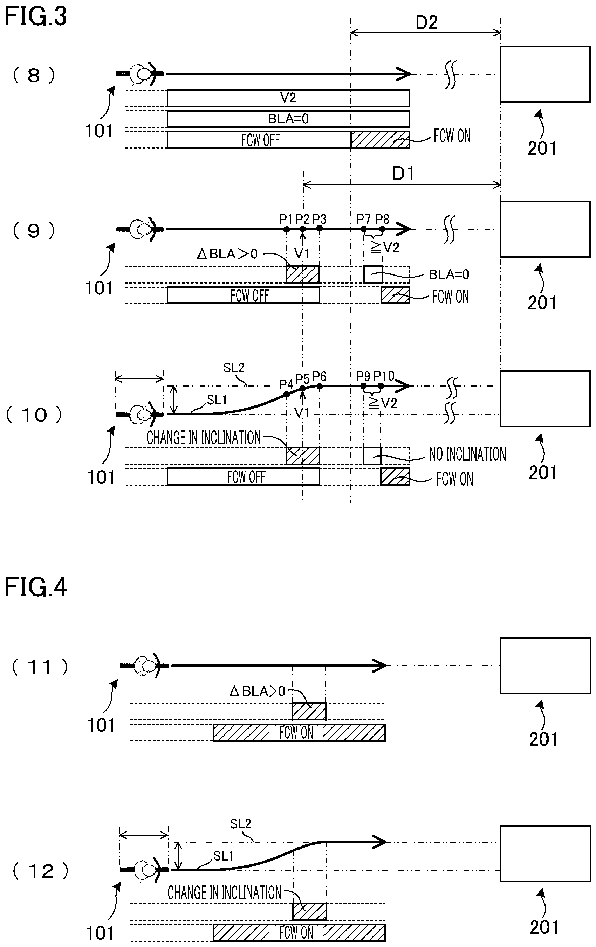

The following will describe a leaning vehicle 101 of Fourth Embodiment of the present teaching with reference to FIG. 3. The leaning vehicle 101 of Fourth Embodiment is structurally identical with that of First Embodiment. The leaning vehicle 101 of Fourth Embodiment may or may not be structurally identical with that of Second Embodiment. The leaning vehicle 101 of Fourth Embodiment may or may not be structurally identical with that of Third Embodiment. An FCW control device 103 of Fourth Embodiment performs control to establish a relationship 8 described below. The FCW control device 103 of Fourth Embodiment performs control to establish at least one of a relationship 9 or a relationship 10 described below. (8), (9), and (10) in FIG. 3 indicate examples of the relationship 8, the relationship 9, and the relationship 10, respectively.

The relationship 8: While the leaning vehicle 101 is moving straight toward the stationary obstacle 201 at a second vehicle speed V2 which is lower than the first vehicle speed V1, when the distance between the leaning vehicle 101 and the obstacle 201 in a traveling direction of the leaning vehicle 101 gradually decreases and becomes equal to a second distance D2 which is shorter than the first distance D1, the FCW control device 103 outputs the FCW.

The relationship 9: After the leaning vehicle 101 passes through the third point P3 in the relationship 2 and while the leaning vehicle 101 is running straight from a seventh point P7 where the distance between the obstacle 201 and the leaning vehicle 101 in the traveling direction of the leaning vehicle 101 is shorter than the second distance D2 to an eighth point P8 toward the stationary obstacle 201, the operation amount BLA of the brake lever 104 is zero and the vehicle speed of the leaning vehicle 101 is equal to or higher than the second vehicle speed V2. In this case, the FCW control device 103 outputs the FCW at least at the eighth point P8.

The relationship 10: After the leaning vehicle 101 passes through the sixth point P6 in the relationship 3 and while the leaning vehicle 101 is moving straight on the second linear line SL2 from a ninth point P9 where the distance between the obstacle 201 and the leaning vehicle 101 in the traveling direction of the leaning vehicle 101 is shorter than the second distance D2 to a tenth point P10 toward the stationary obstacle 201, the inclination in the vehicle left-right direction of the leaning vehicle body frame 102 is unchanged and the vehicle speed of the leaning vehicle 101 is equal to or higher than the second vehicle speed V2. In this case, the FCW control device 103 outputs the FCW at least at the tenth point P10.

The seventh point P7 is a point between the third point P3 and the obstacle 201. The ninth point P9 is a point between the sixth point P6 and the obstacle 201.

In the relationship 9, after a period of time (between the first point P1 and the third point P3) in which the brake lever 104 is being operated in the pulling direction or in the releasing direction and the FCW is not output, the FCW control device 103 outputs the FCW when the operation amount BLA of the brake lever 104 is zero. On this account, after the brake lever 104 is operated in the pulling direction or in the releasing direction, it is possible to notify the rider of the necessity of the operation by means of the FCW.

In the relationship 10, after a period of time (between the fourth point P4 to the sixth point P6) in which the rider is changing the inclination in the vehicle left-right direction of the leaning vehicle body frame 102 and the FCW is not output, the FCW control device 103 outputs the FCW while the inclination in the vehicle left-right direction of the leaning vehicle body frame 102 is unchanged. On this account, after the rider changes the inclination in the vehicle left-right direction of the leaning vehicle body frame 102, it is possible to notify the rider of the necessity of the operation by means of the FCW.

### [Fifth Embodiment]

The following will describe a leaning vehicle 101 of Fifth Embodiment of the present teaching with reference to FIG. 4. The leaning vehicle 101 of Fifth Embodiment is structurally identical with that of First Embodiment. The leaning vehicle 101 of Fifth Embodiment may or may not be structurally identical with that of Second Embodiment. The leaning vehicle 101 of Fifth Embodiment may or may not be structurally identical with that of Third Embodiment.

The leaning vehicle 101 of Fifth Embodiment may or may not be structurally identical with that of Fourth Embodiment. An FCW control device 103 of Fifth Embodiment performs control to establish a relationship 11 and a relationship 12 described below. (11), and (12) in FIG. 4 indicate examples of the relationship 11 and the relationship 12, respectively.

The relationship 11: The leaning vehicle 101 is moving straight toward the stationary obstacle 201. The FCW control device 103 continues the output of the FCW irrespective of the operation of the brake lever 104 while the FCW is output.

The relationship 12: After the leaning vehicle 101 moves straight on a first linear line SL1 toward the stationary obstacle 201, the traveling direction of the leaning vehicle 101 is changed to a direction toward the second linear line SL2, and then the leaning vehicle 101 moves straight on the second linear line SL2 toward the stationary obstacle 201. The FCW control device 103 continues the output of the FCW irrespective of a change in the inclination in the vehicle left-right direction of the leaning vehicle body frame 102 while the FCW is output.

According to Fifth Embodiment, even if the brake lever 104 is being operated in the pulling direction or in the releasing direction or the rider is changing the inclination in the vehicle left-right direction of the leaning vehicle body frame 102 while the FCW is output, the output of the FCW is maintained. It is therefore possible to notify the rider of the necessity of the operation by means of the FCW.

### [Sixth Embodiment]

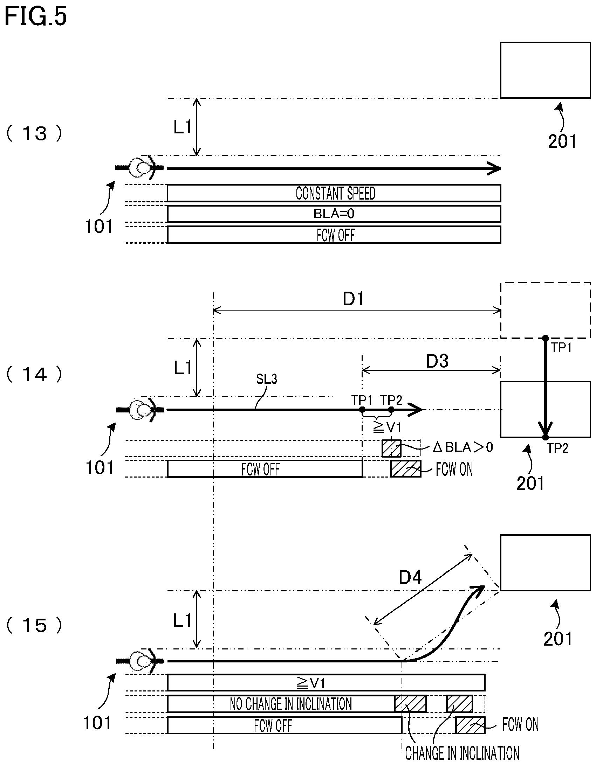

The following will describe a leaning vehicle 101 of Sixth Embodiment of the present teaching with reference to FIG. 5. The leaning vehicle 101 of Sixth Embodiment is structurally identical with that of First Embodiment. The leaning vehicle 101 of Sixth Embodiment may or may not be structurally identical with that of Second Embodiment. The leaning vehicle 101 of Sixth Embodiment may or may not be structurally identical with that of Third Embodiment. The leaning vehicle 101 of Sixth Embodiment may or may not be structurally identical with that of Fourth Embodiment. The leaning vehicle 101 of Sixth Embodiment may or may not be structurally identical with that of Fifth Embodiment. An FCW control device 103 of Sixth Embodiment performs control to establish a relationship 13 described below. The FCW control device 103 of Sixth Embodiment performs control to establish at least one of a relationship 14 or a relationship 15 described below. (13), (14), and (15) in FIG. 5 indicate examples of the relationship 13, the relationship 14, and the relationship 15, respectively.

The relationship 13: While the leaning vehicle 101 runs straight at constant speed so that the distance in the vehicle left-right direction between the obstacle 201 and the leaning vehicle 101 is equal to a first left-right direction distance L1, the FCW control device 103 does not output the FCW irrespective of the distance between the obstacle 201 and the leaning vehicle 101 in the traveling direction of the leaning vehicle 101.

The relationship 14: The leaning vehicle 101 moves straight on a third linear line SL3. At a first time point TP1 at which the distance between the obstacle 201 and the leaning vehicle 101 in the traveling direction of the leaning vehicle 101 becomes equal to a third distance D3 that is shorter than the first distance D1, the obstacle 201 starts to move in a direction orthogonal to the third linear line SL3 toward the third linear line SL3 from a position where the distance in the vehicle left-right direction between the obstacle 201 and the leaning vehicle 101 is equal to the first left-right direction distance L1. At a second time point TP2, the obstacle 201 locates on the third linear line SL3 and the obstacle 201 ends the movement. When the vehicle speed of the leaning vehicle 101 is equal to or higher than the first vehicle speed V1 while the leaning vehicle 101 runs from the first time point TP1 to the second time point TP2, the FCW control device 103 outputs the FCW at least at the second time point TP2 irrespective of the operation state of the brake lever 104.

The relationship 15: After the leaning vehicle 101 runs straight at a vehicle speed equal to or higher than the first vehicle speed V1 until the shortest distance between the stationary obstacle 201 and the leaning vehicle 101 becomes equal to a fourth distance D4 that is shorter than the first distance D1 so that the distance in the vehicle left-right direction between the stationary obstacle 201 and the leaning vehicle 101 is maintained at the first left-right direction distance L1, the traveling direction of the leaning vehicle 101 is changed and the leaning vehicle 101 runs toward the stationary obstacle 201 at a vehicle speed equal to or higher than the first vehicle speed V1. In this case, irrespective of a change in the inclination in the vehicle left-right direction of the leaning vehicle body frame 102, the FCW control device 103 outputs the FCW.

The fourth distance D4 may be identical with the third distance D3 or may be shorter than or longer than the third distance D3.

According to Sixth Embodiment, when the obstacle 201 suddenly appears at a location close to the leaning vehicle 101, the FCW is output even when the brake lever 104 is being operated in the pulling direction or in the releasing direction or the rider is changing the inclination in the vehicle left-right direction of the leaning vehicle body frame 102. On this account, when the obstacle 201 suddenly appears at a location close to the leaning vehicle 101, it is possible to notify the rider of the necessity of the operation by means of the FCW.

### [Seventh Embodiment]

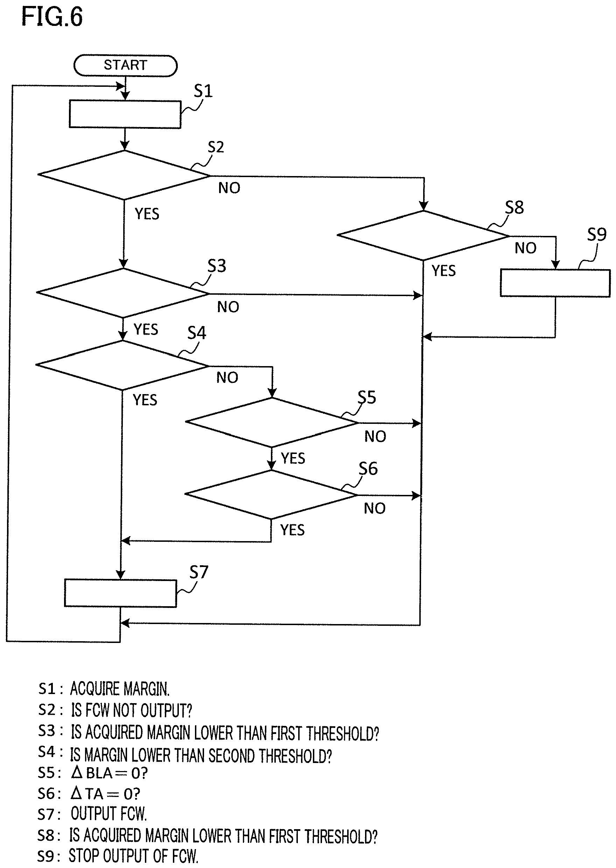

The following will describe a leaning vehicle 101 of Seventh Embodiment of the present teaching with reference to FIG. 6. The leaning vehicle 101 of Seventh Embodiment is structurally identical with those of First Embodiment, Fourth Embodiment, Fifth Embodiment, and Sixth Embodiment. The leaning vehicle 101 of Seventh Embodiment may or may not be structurally identical with that of Second Embodiment. The leaning vehicle 101 of Seventh Embodiment may or may not be structurally identical with that of Third Embodiment. FIG. 6 is a flow chart of an example of a process executed by an FCW control device 103 of Seventh Embodiment. In the step S1, the FCW control device 103 acquires a margin based on the relationship between the obstacle and the leaning vehicle 101. In the step S2, whether an FCW is being output is determined. When the FCW is not being output (YES in the step S2), the process proceeds to the step S3 and whether a margin smaller than a first threshold has been acquired is determined. When the margin equal to or larger than the first threshold is acquired or no margin is acquired (NO in the step S3), the process goes back to the step S1. A case where no margin is acquired is, for example, there is no obstacle ahead of the leaning vehicle 101. When the margin smaller than the first threshold is acquired (YES in the step S3), the process proceeds to the step S4 and whether the margin is smaller than a second threshold is determined. When the margin is equal to or larger than the second threshold (No in the step S4) and both an amount of change ΔBLA per time period of the operation amount of the brake lever 104 and an amount of change ΔTA per time period of the inclination in the vehicle left-right direction of the leaning vehicle body frame 102 are both zero (YES in the step S5 and YES in the step S6), the FCW control device 103 outputs the FCW in the step S7. When the margin is equal to or larger than the second threshold (NO in the step S4) and either the amount of change ΔBLA is larger than zero (NO in the step S5) or the amount of change ΔTA is larger than zero (NO in the step S6), the process goes back to the step S1. When the margin is smaller than the second threshold (Yes in the step S4), the FCW control device 103 outputs the FCW in the step S7. When the FCW is being output (NO in the step S2), the process proceeds to the step S8 and whether a margin smaller than a first threshold has been acquired is determined. When the margin equal to or larger than the first threshold is acquired or no margin is acquired (NO in the step S8), the FCW control device 103 stops the output of the FCW in the step S9. When a margin lower than the first threshold is acquired (YES in the step S8), the process goes back to the step S1.

### [Eighth Embodiment]

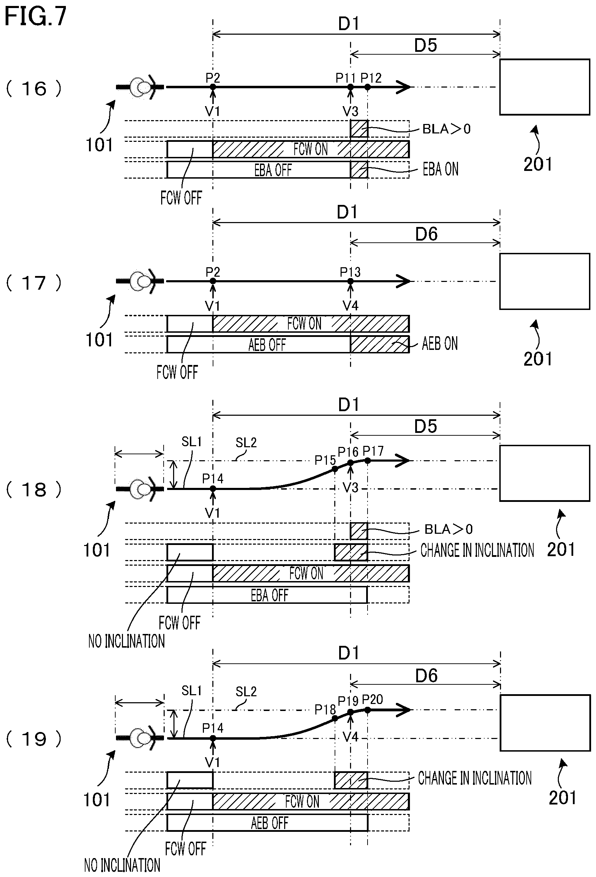

The following will describe a leaning vehicle 101 of Eighth Embodiment of the present teaching with reference to FIG. 7. The leaning vehicle 101 of Eighth Embodiment is structurally identical with that of First Embodiment. The leaning vehicle 101 of Eighth Embodiment may or may not be structurally identical with that of Second Embodiment. The leaning vehicle 101 of Eighth Embodiment may or may not be structurally identical with that of Third Embodiment. The leaning vehicle 101 of Eighth Embodiment may or may not be structurally identical with that of Fourth Embodiment. The leaning vehicle 101 of Eighth Embodiment may or may not be structurally identical with that of Fifth Embodiment. The leaning vehicle 101 of Eighth Embodiment may or may not be structurally identical with that of Sixth Embodiment. The leaning vehicle 101 of Eighth Embodiment may or may not be structurally identical with that of Seventh Embodiment. An FCW control device 103 of Eighth Embodiment has a function of at least one of the EBA or the AEB. The FCW control device 103 having the function of the EBA activates the EBA while an FCW is being output. The FCW control device 103 having the function of the AEB drives the AEB while an FCW is being output.

When having the function of the EBA, the FCW control device 103 of Eighth Embodiment performs control to establish a relationship 16 described below. When having the function of the AEB, the FCW control device 103 of Eighth Embodiment performs control to establish a relationship 17 described below. (16) and (17) in FIG. 7 indicate examples of the relationship 16 and the relationship 17, respectively.

The relationship 16: The leaning vehicle 101 moves straight toward the stationary obstacle 201. The vehicle speed of the leaning vehicle 101 is equal to the first vehicle speed V1 at the second point P2 where the distance between the leaning vehicle 101 and the obstacle 201 in the traveling direction of the leaning vehicle 101 is equal to the first distance D1, and the FCW starts to be output when the leaning vehicle 101 reaches the second point P2. The EBA is not activated until the leaning vehicle 101 reaches an eleventh point P11 where the distance between the obstacle 201 and the leaning vehicle 101 in the traveling direction of the leaning vehicle 101 becomes equal to a fifth distance D5 that is shorter than the first distance D1. While the leaning vehicle 101 runs from the eleventh point P11 to a twelfth point P12, the operation amount BLA of the brake lever 104 is larger than zero and the vehicle speed of the leaning vehicle 101 at the eleventh point P11 is equal to a third vehicle speed V3 that is lower than the first vehicle speed V1. In this case, the FCW control device 103 continues the EBA at least while the leaning vehicle 101 runs from the eleventh point P11 to the twelfth point P12.

The relationship 17: The leaning vehicle 101 moves straight toward the stationary obstacle 201. The vehicle speed of the leaning vehicle 101 is equal to the first vehicle speed V1 at the second point P2 where the distance between the leaning vehicle 101 and the obstacle 201 in the traveling direction of the leaning vehicle 101 is equal to the first distance D1, and the FCW starts to be output when the leaning vehicle 101 reaches the second point P2. The AEB is not activated until the leaning vehicle 101 reaches a thirteenth point P13 where the distance between the leaning vehicle 101 and the obstacle 201 in the traveling direction of the leaning vehicle 101 is equal to a sixth distance D6 that is shorter than the first distance D1, and the vehicle speed of the leaning vehicle 101 at the thirteenth point P13 is equal to a fourth vehicle speed V4. In this case, the FCW control device 103 activates the AEB when the leaning vehicle 101 reaches the thirteenth point P13.

The sixth distance D6 may be identical with the fifth distance D5 or may be shorter than or longer than the fifth distance D5. The fourth vehicle speed V4 may be identical with the third vehicle speed V3 or may be higher than or lower than the third vehicle speed V3.

### [Ninth Embodiment]

The following will describe a leaning vehicle 101 of Ninth Embodiment of the present teaching with reference to FIG. 7. The leaning vehicle 101 of Ninth Embodiment is structurally identical with that of Eighth Embodiment. When having the function of the EBA, the FCW control device 103 of Ninth Embodiment performs control to establish a relationship 18 described below. When having the function of the AEB, the FCW control device 103 of Ninth Embodiment performs control to establish a relationship 19 described below. (18), and (19) in FIG. 7 indicate examples of the relationship 18 and the relationship 19, respectively.

The relationship 18: After the leaning vehicle 101 moves straight on a first linear line SL1 toward the stationary obstacle 201, the traveling direction of the leaning vehicle 101 is changed to a direction toward the second linear line SL2, and then the leaning vehicle 101 moves straight on the second linear line SL2 toward the stationary obstacle 201. The vehicle speed of the leaning vehicle 101 is equal to the first vehicle speed V1 at a fourteenth point P14 on a first linear line SL1 where the distance between the obstacle 201 and the leaning vehicle 101 in the traveling direction of the leaning vehicle 101 is equal to the first distance D1, and the FCW starts to be output when the leaning vehicle 101 reaches the fourteenth point P14. The EBA is not activated until the leaning vehicle 101 reaches a sixteenth point P16 where the distance between the obstacle 201 and the leaning vehicle 101 in the traveling direction of the leaning vehicle 101 becomes equal to the fifth distance D5. The rider is changing the inclination in the vehicle left-right direction of the leaning vehicle body frame 102 by making an input to the leaning vehicle 101 while the leaning vehicle 101 runs from a fifteenth point P15 where the distance between the leaning vehicle 101 and the obstacle 201 in the traveling direction of the leaning vehicle 101 is longer than the fifth distance D5 to a seventeenth point P17 where the distance between the leaning vehicle 101 and the obstacle 201 in the traveling direction of the leaning vehicle 101 is shorter than the fifth distance D5. While the leaning vehicle 101 runs from the sixteenth point P16 to the seventeenth point P17, the operation amount BLA of the brake lever 104 is larger than zero and the vehicle speed of the leaning vehicle 101 at the sixteenth point P16 is equal to the third vehicle speed V3. In this case, the FCW control device 103 does not activate the EBA at least while the leaning vehicle 101 runs from the sixteenth point P16 to the seventeenth point P17.

The relationship 19: After the leaning vehicle 101 moves straight on a first linear line SL1 toward the stationary obstacle 201, the traveling direction of the leaning vehicle 101 is changed to a direction toward the second linear line SL2, and then the leaning vehicle 101 moves straight on the second linear line SL2 toward the stationary obstacle 201. The vehicle speed of the leaning vehicle 101 is equal to the first vehicle speed V1 at a fourteenth point P14 on a first linear line SL1 where the distance between the obstacle 201 and the leaning vehicle 101 in the traveling direction of the leaning vehicle 101 is equal to the first distance D1, and the FCW starts to be output when the leaning vehicle 101 reaches the fourteenth point P14. The AEB is not activated until the leaning vehicle 101 reaches a nineteenth point P19 where the distance between the obstacle 201 and the leaning vehicle 101 in the traveling direction of the leaning vehicle 101 becomes equal to the sixth distance D6. The rider is changing the inclination in the vehicle left-right direction of the leaning vehicle body frame 102 by making an input to the leaning vehicle 101 while the leaning vehicle 101 runs from an eighteenth point P18 where the distance between the leaning vehicle 101 and the obstacle 201 in the traveling direction of the leaning vehicle 101 is longer than the sixth distance D6 to a twentieth point P20 where the distance between the leaning vehicle 101 and the obstacle 201 in the traveling direction of the leaning vehicle 101 is shorter than the sixth distance D6. The vehicle speed of the leaning vehicle 101 at the nineteenth point P19 is equal to the fourth vehicle speed V4. In this case, the FCW control device 103 does not activate the AEB at least while the leaning vehicle 101 runs from the nineteenth point P19 to the twentieth point P20.

According to Ninth Embodiment, the FCW control device 103 does not activate the EBA and/or the AEB while the rider is changing the inclination in the vehicle left-right direction of the leaning vehicle body frame 102. On this account, as compared to cases where the FCW control device 103 activates the EBA and/or the AEB while the inclination in the vehicle left-right direction of the leaning vehicle body frame 102 is being changed, it is possible to decrease the number of types of data used for determining whether to output the FCW and to decrease the detection accuracy of data used for determining whether to output the FCW. Therefore, it is possible to use hardware resource having a small processing capability or memory capacity. As a result, the degree of freedom in designing the hardware resource of the FCW control device 103 can be improved.

To the relationship 18, a condition "the amount of change ΔTA per time period of inclination in the vehicle left-right direction of the leaning vehicle body frame 102 while the leaning vehicle 101 runs from the fifteenth point P15 to the seventeenth point P17 is equal to or more than a second inclination changing amount" may be added. To the relationship 19, a condition "the amount of change ΔTA per time period of inclination in the vehicle left-right direction of the leaning vehicle body frame 102 while the leaning vehicle 101 runs from the eighteenth point P18 to the twentieth point P20 is equal to or more than the second inclination changing amount" may be added. The second inclination changing amount may be identical with the first inclination changing amount B1 or may be larger than or smaller than the first inclination changing amount B1.

### [Tenth Embodiment]

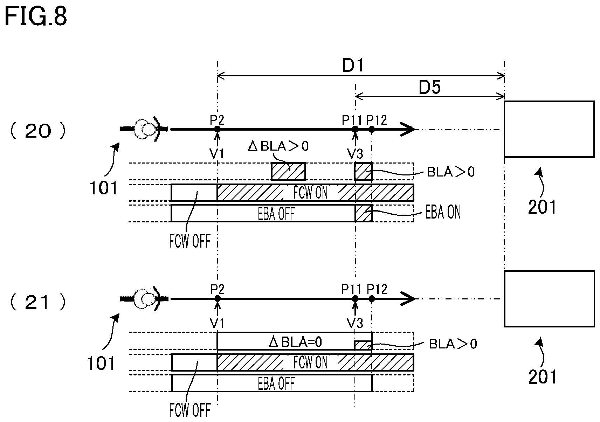

The following will describe a leaning vehicle 101 of Tenth Embodiment of the present teaching with reference to FIG. 8. The leaning vehicle 101 of Tenth Embodiment is structurally identical with that of Eighth Embodiment. The leaning vehicle 101 of Tenth Embodiment may or may not be structurally identical with that of Ninth Embodiment. When having the function of the EBA, the FCW control device 103 of Tenth Embodiment performs control to establish a relationship 20 and a relationship 21 described below. (20) and (21) in FIG. 8 indicate examples of the relationship 20 and the relationship 21, respectively.

The relationship 20: A condition "the brake lever 104 is operated by the hand of the rider in the pulling direction or in the releasing direction in at least part of a period of time in which the leaning vehicle 101 runs from the second point P2 to the eleventh point P11" is added to the relationship 16. Apart from this, the relationship 20 is identical with the relationship 16.

The relationship 21: A condition "the brake lever 104 is not operated by the hand of the rider in the pulling direction or in the releasing direction while the leaning vehicle 101 runs from the second point P2 to the eleventh point P11" is added to the relationship 16, and the condition "the FCW control device 103 continues the EBA at least while the leaning vehicle 101 runs from the eleventh point P11 to the twelfth point P12" in the relationship 16 is replaced with a condition "the FCW control device 103 does not activate the EBA at least while the leaning vehicle 101 runs from the eleventh point P11 to the twelfth point P12". Apart from this, the relationship 21 is identical with the relationship 16.

In the relationship 20, the condition "the brake lever 104 is operated in the pulling direction or in the releasing direction" may be replaced with a condition "the brake lever 104 is operated in the pulling direction". In this case, the condition "the brake lever 104 is not operated in the pulling direction or in the releasing direction" in the relationship 21 is replaced with a condition "the brake lever 104 is not operated in the pulling direction".

To the relationship 20, a condition "the amount of change ΔBLA per time period of the operation amount of the brake lever 104 is equal to or more than a second brake lever changing amount in at least part of the period of time in which the leaning vehicle 101 runs from the second point P2 to the eleventh point P11" may be added. In this case, the condition "the brake lever 104 is not operated by the hand of the rider in the pulling direction or in the releasing direction while the leaning vehicle 101 runs from the second point P2 to the eleventh point 11" in the relationship 21 is replaced with a condition "the amount of change ΔBLA per time period of the operation amount of the brake lever 104 is less than the second brake lever changing amount while the leaning vehicle 101 runs from the second point P2 to the eleventh point 11". The second brake lever changing amount may be identical with the first brake lever changing amount A1, or may be larger than or smaller than the first brake lever changing amount A1.

### [Eleventh Embodiment]

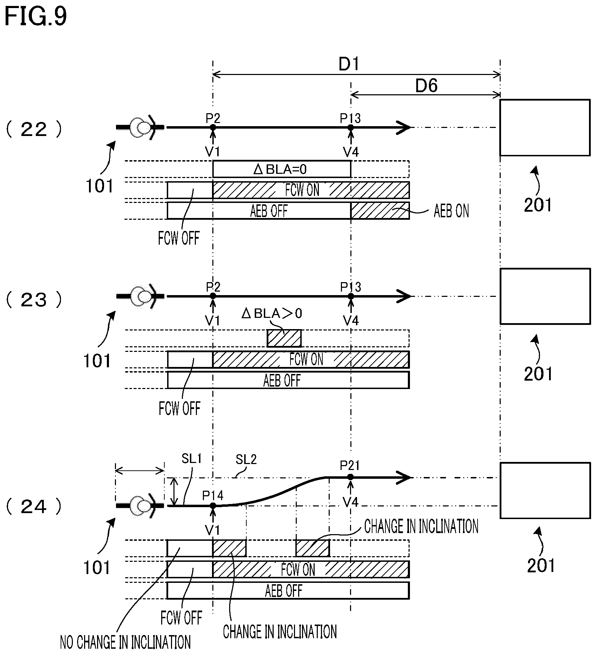

The following will describe a leaning vehicle 101 of Eleventh Embodiment of the present teaching with reference to FIG. 9. The leaning vehicle 101 of Eleventh Embodiment is structurally identical with that of Eighth Embodiment. The leaning vehicle 101 of Eleventh Embodiment may or may not be structurally identical with that of Ninth Embodiment. The leaning vehicle 101 of Eleventh Embodiment may or may not be structurally identical with that of Tenth Embodiment. When having the function of the AEB, the FCW control device 103 of Eleventh Embodiment performs control to establish a relationship 22, a relationship 23, and a relationship 24 described below. (22), (23), and (24) in FIG. 9 indicate examples of the relationship 22, the relationship 23, and the relationship 24, respectively. The relationship 22: A condition "the brake lever 104 is not operated by the hand of the rider in the pulling direction or in the releasing direction while the leaning vehicle 101 runs from the second point P2 to the thirteenth point P13" is added to the relationship 17. Apart from this, the relationship 22 is identical with the relationship 17.

The relationship 23: A condition "the brake lever 104 is operated by the hand of the rider in the pulling direction or in the releasing direction in at least part of a period of time in which the leaning vehicle 101 runs from the second point P2 to the thirteenth point P13" is added to the relationship 17, and the condition "the FCW control device 103 activates the AEB when the leaning vehicle 101 reaches the thirteenth point P13" in the relationship 17 is replaced with a condition "the FCW control device 103 does not activate the AEB irrespective of the distance between the obstacle 201 and the leaning vehicle 101 in the traveling direction of the leaning vehicle 101". Apart from this, the relationship 23 is identical with the relationship 17.

The relationship 24: After the leaning vehicle 101 moves straight on a first linear line SL1 toward the stationary obstacle 201, the traveling direction of the leaning vehicle 101 is changed to a direction toward the second linear line SL2, and then the leaning vehicle 101 moves straight on the second linear line SL2 toward the stationary obstacle 201. The vehicle speed of the leaning vehicle 101 is equal to the first vehicle speed V1 at a fourteenth point P14 on a first linear line SL1 where the distance between the obstacle 201 and the leaning vehicle 101 in the traveling direction of the leaning vehicle 101 is equal to the first distance D 1, and the FCW starts to be output when the leaning vehicle 101 reaches the fourteenth point P14. The AEB is not activated until the leaning vehicle 101 reaches a twenty-first point P21 where the distance between the obstacle 201 and the leaning vehicle 101 in the traveling direction of the leaning vehicle 101 becomes equal to the sixth distance D6. The rider is changing the inclination in the vehicle left-right direction of the leaning vehicle body frame 102 by making an input to the leaning vehicle 101 in at least part of a period of time in which the leaning vehicle 101 runs from the fourteenth point P14 to the twenty-first point P21. The vehicle speed of the leaning vehicle 101 at the twenty-first point P21 is equal to the fourth vehicle speed V4. In this case, irrespective of the distance between the obstacle 201 and the leaning vehicle 101 in the traveling direction of the leaning vehicle 101, the FCW control device 103 does not activate the AEB.

To the relationship 23, a condition "the amount of change ΔBLA per time period of the operation amount of the brake lever 104 is equal to or more than a third brake lever changing amount in at least part of the period of time in which the leaning vehicle 101 runs from the second point P2 to the thirteenth point P13" may be added. In this case, the condition "the brake lever 104 is not operated by the hand of the rider in the pulling direction or in the releasing direction while the leaning vehicle 101 runs from the second point P2 to the thirteenth point P13" in the relationship 22 may be replaced with a condition "the amount of change ΔBLA per time period of the operation amount of the brake lever 104 is less than the third brake lever changing amount while the leaning vehicle 101 runs from the second point P2 to the thirteenth point P13". The third brake lever changing amount may be identical with the first brake lever changing amount A1, or may be larger than or smaller than the first brake lever changing amount A1.

To the relationship 24, a condition "the amount of change ΔTA per time period of inclination in the vehicle left-right direction of the leaning vehicle body frame 102 is equal to or more than a third inclination changing amount in at least part of a period of time in which the leaning vehicle 101 runs from the fourteenth point P14 to the twenty-first point P21" may be added. The third inclination changing amount may be identical with the first inclination changing amount B1 or may be larger than or smaller than the first inclination changing amount B1.

### [Twelfth Embodiment]

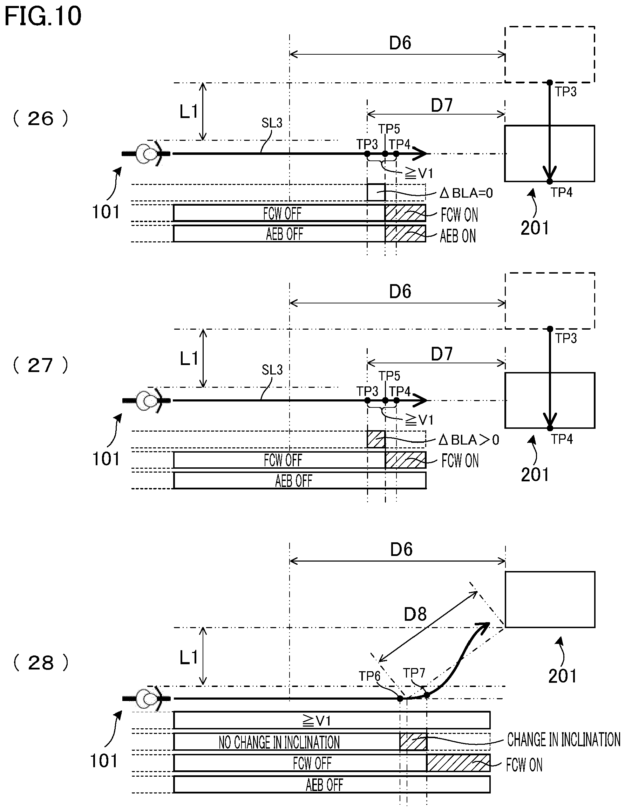

The following will describe a leaning vehicle 101 of Twelfth Embodiment of the present teaching with reference to FIG. 10. The leaning vehicle 101 of Twelfth Embodiment is structurally identical with that of Eighth Embodiment. The leaning vehicle 101 of Twelfth Embodiment may or may not be structurally identical with that of Ninth Embodiment. The leaning vehicle 101 of Twelfth Embodiment may or may not be structurally identical with that of Tenth Embodiment. The leaning vehicle 101 of Twelfth Embodiment may or may not be structurally identical with that of Eleventh Embodiment. When having the function of the AEB, the FCW control device 103 of Twelfth Embodiment performs control to establish a relationship 25, a relationship 26, and a relationship 27 described below. (26), (27), and (28) in FIG. 10 indicate examples of the relationship 26, the relationship 27, and the relationship 28, respectively. A figure showing an example of the relationship 25 is omitted because it is similar to (13) of FIG. 5 showing an example of the relationship 13.

The relationship 25: While the leaning vehicle 101 runs straight at constant speed so that the distance in the vehicle left-right direction between the obstacle 201 and the leaning vehicle 101 is equal to the first left-right direction distance L1, the FCW control device 103 does not activate the AEB irrespective of the distance between the obstacle 201 and the leaning vehicle 101 in the traveling direction of the leaning vehicle 101.

The relationship 26: The leaning vehicle 101 moves straight on a third linear line SL3. At a third time point TP3 at which the distance between the obstacle 201 and the leaning vehicle 101 in the traveling direction of the leaning vehicle 101 becomes equal to a seventh distance D7 that is shorter than the sixth distance D6, the obstacle 201 starts to move in a direction orthogonal to the third linear line SL3 toward the third linear line SL3 from a position where distance in the vehicle left-right direction between the obstacle 201 and the leaning vehicle 101 is equal to the first left-right direction distance L1. At a fourth time point TP4, the obstacle 201 locates on the third linear line SL3 and the obstacle 201 ends the movement. While the leaning vehicle 101 runs from the third time point TP3 to the fourth time point TP4, the vehicle speed of the leaning vehicle 101 is equal to or higher than the first vehicle speed V1. The FCW is output from a fifth time point TP5 that is between the third time point TP3 and the fourth time point TP4. The brake lever 104 is not operated by the hand of the rider in the pulling direction or in the releasing direction while the leaning vehicle 101 runs from the third time point TP3 to the fifth time point TP5. In this case, the FCW control device 103 activates the AEB from the fifth time point TP5.

The relationship 27: The condition "the brake lever 104 is not operated by the hand of the rider in the pulling direction or in the releasing direction while the leaning vehicle 101 runs from the third time point TP3 to the fifth time point TP5" in the relationship 26 is replaced with a condition "the brake lever 104 is operated by the hand of the rider in the pulling direction or in the releasing direction while the leaning vehicle 101 runs from the third time point TP3 to the fifth time point TP5", and the condition "the FCW control device 103 activates the AEB from the fifth time point TP5" in the relationship 26 is replaced with a condition "the FCW control device 103 does not activate the AEB irrespective of the distance between the obstacle 201 and the leaning vehicle 101 in the traveling direction of the leaning vehicle 101". Apart from this, the relationship 27 is identical with the relationship 26.

The relationship 28: After the leaning vehicle 101 runs straight at a vehicle speed equal to or higher than the first vehicle speed V1 until the shortest distance between the stationary obstacle 201 and the leaning vehicle 101 becomes equal to an eighth distance D8 that is shorter than the sixth distance D6 so that the distance in the vehicle left-right direction between the stationary obstacle 201 and the leaning vehicle 101 is maintained at the first left-right direction distance L1, the traveling direction of the leaning vehicle 101 is changed and the leaning vehicle 101 runs toward the stationary obstacle 201 at a vehicle speed equal to or higher than the first vehicle speed V1. The FCW is output from a seventh time point TP7. The inclination in the vehicle left-right direction of the leaning vehicle body frame 102 is changed by an input made by the rider to the leaning vehicle 101 while the leaning vehicle 101 runs from a sixth time point TP6 to the seventh time point TP7. In this case, irrespective of the distance between the obstacle 201 and the leaning vehicle 101 in the traveling direction of the leaning vehicle 101, the FCW control device 103 does not activate the AEB.

The seventh distance D7 may or may not be identical with the third distance D3. The eighth distance D8 may or may not be identical with the fourth distance D4.

### [Thirteenth Embodiment]

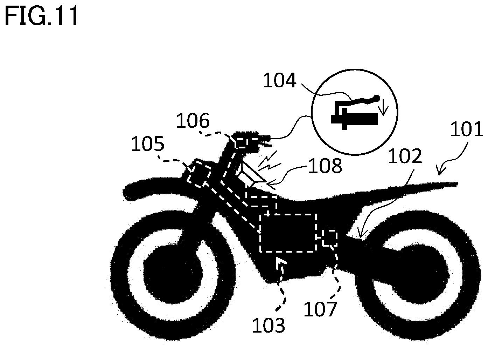

The following will describe a leaning vehicle 101 of Thirteenth Embodiment of the present teaching with reference to FIG. 11. The leaning vehicle 101 of Thirteenth Embodiment is structurally identical with that of First Embodiment. The leaning vehicle 101 of Thirteenth Embodiment may or may not be structurally identical with at least one of those of Second to Twelfth Embodiments. The leaning vehicle 101 of Twelfth Embodiment includes a margin-related sensor 105, a brake lever operation amount related sensor 106, and a vehicle body inclination sensor 107. The positions of the sensors 105, 106, and 107 are not limited to those shown in FIG. 11. The margin-related sensor 105 is constituted by at least one of a front sensor configured to detect an object ahead of the leaning vehicle 101 or a vehicle-to-vehicle communication apparatus configured to receive, from another vehicle, a signal related to location information of the other vehicle. The brake lever operation amount related sensor 106 is configured to detect a physical quantity related to an operation amount BLA of the brake lever 104 operated by the hand of the rider. The vehicle body inclination sensor 107 is configured to detect a physical quantity related to inclination in the vehicle left-right direction of the leaning vehicle body frame 102. The FCW control device 103 acquires a margin based on the relationship between the obstacle and the leaning vehicle 101, with reference to information acquired by the margin-related sensor 105. The FCW control device 103 controls the output of the FCW based on the acquired margin and detection results of the brake lever operation amount related sensor 106 and the vehicle body inclination sensor 107. The leaning vehicle 101 further includes a notification device 108 configured to give a notification to the rider. The FCW control device 103 outputs the FCW by controlling the notification device 108.

The FCW control device described in the specification is encompassed in a driving assist controller for a leaning vehicle recited in the specification of Japanese Patent Application No. 2019-175786 that is a basic application of the subject application. The FCW in this specification is equivalent to a warning in the specification of the basic application. The notification device in this specification is equivalent to a warning means and a warning device 70 in the specification of the basic application. The brake lever operation amount related sensor of this specification is equivalent to a front brake operation sensor 54 and/or a rear brake operation sensor 55 in the specification of the basic application. The vehicle body inclination sensor in this specification is equivalent to a leaning angle related physical quantity detector 62 of the specification of the basic application.

### [Reference Signs List]

101: leaning vehicle, 102: leaning vehicle body frame, 103: FCW control device, 104: brake lever, 105: margin-related sensor (at least one of front sensor or vehicle-to-vehicle communication apparatus), 106: brake lever operation amount related sensor, 107: vehicle body inclination sensor, 201: obstacle

## Claims

1. A leaning vehicle (101) including a Forward Collision Warning, FCW, control device (103) which is mounted on a leaning vehicle body frame (102) which is configured to lean in a vehicle rightward direction when turning right and leans in a vehicle leftward direction when turning left, the FCW control device (103) being configured to output an FCW based on a margin acquired based on relationship between an obstacle (201) and the leaning vehicle (101),
the margin acquired based on relationship between an obstacle (201) and the leaning vehicle (101) is a margin when a rider deals with the obstacle,
the leaning vehicle (101) comprising at least one of a front sensor configured to detect an object ahead of the leaning vehicle (101) or a vehicle-to-vehicle communication apparatus configured to receive, from another vehicle, a signal related to location information of the other vehicle,
the FCW control device (103) being configured to acquire the margin based on the relationship between the obstacle (201) and the leaning vehicle (101), with reference to information acquired by at least one of the front sensor or the vehicle-to-vehicle communication apparatus,
the FCW control device (103) being configured to perform control to establish a relationship 1, a relationship 2, and a relationship 3:
the relationship 1: while the leaning vehicle (101) is moving straight toward the stationary obstacle (201) at a first vehicle speed, when the distance between the leaning vehicle (101) and the obstacle (201) in a traveling direction of the leaning vehicle (101) gradually decreases and becomes equal to a first distance, the FCW control device (103) outputs the FCW;
the relationship 2: when
(i) the leaning vehicle (101) moves straight toward the stationary obstacle (201),
(ii) a brake lever (104) is being operated in a pulling direction or in a releasing direction by a hand of a rider while the leaning vehicle (101) runs from a first point (P1) where the distance between the leaning vehicle (101) and the obstacle (201) in the traveling direction of the leaning vehicle (101) is longer than the first distance to a third point (P3) where the distance between the leaning vehicle (101) and the obstacle (201) in the traveling direction of the leaning vehicle (101) is shorter than the first distance,
(iii) the FCW is not output until the leaning vehicle (101) reaches a second point (P2) where the distance between the leaning vehicle (101) and the obstacle (201) in the traveling direction of the leaning vehicle (101) is equal to the first distance, and
(iv) vehicle speed of the leaning vehicle (101) at the second point (P2) is equal to the first vehicle speed,
the FCW control device (103) does not output the FCW at least while the leaning vehicle (101) runs from the second point (P2) to the third point (P3); and
the relationship 3: when,
(I) after the leaning vehicle (101) moves straight on a first linear line (SL1) toward the stationary obstacle (201), the traveling direction of the leaning vehicle (101) is changed to a direction toward a second linear line (SL2) which is in parallel to the first linear line (SL1) and is separated from the first linear line (SL1) by a distance shorter than the overall length of the leaning vehicle (101), and then the leaning vehicle (101) moves straight on the second linear line (SL2) toward the stationary obstacle (201),
(II) while the leaning vehicle (101) runs from a fourth point (P4) where the distance between the leaning vehicle (101) and the obstacle (201) in the traveling direction of the leaning vehicle (101) is longer than the first distance to a sixth point (P6) where the distance between the leaning vehicle (101) and the obstacle (201) in the traveling direction of the leaning vehicle (101) is shorter than the first distance, the rider is changing inclination of the leaning vehicle body frame (102) in a vehicle left-right direction by making an input to the leaning vehicle (101),
(III) the FCW is not output until the leaning vehicle (101) reaches a fifth point (P5) where the distance between the leaning vehicle (101) and the obstacle (201) in the traveling direction of the leaning vehicle (101) is equal to the first distance, and
(IV) the vehicle speed of the leaning vehicle (101) at the fifth point (P5) is equal to the first vehicle speed,
the FCW control device (103) does not output the FCW at least while the leaning vehicle (101) runs from the fifth point (P5) to the sixth point (P6).

2. The leaning vehicle (101) according to claim 1, wherein the FCW control device (103) is configured to perform control to establish a relationship 4 and a relationship 5:
the relationship 4: when
(i) the leaning vehicle (101) moves straight toward the stationary obstacle (201),
(ii) the brake lever (104) is being operated in the pulling direction or in the releasing direction by the hand of the rider while the leaning vehicle (101) runs from the first point (P1) where the distance between the leaning vehicle (101) and the obstacle (201) in the traveling direction of the leaning vehicle (101) is longer than the first distance to the third point (P3) where the distance between the leaning vehicle (101) and the obstacle (201) in the traveling direction of the leaning vehicle (101) is shorter than the first distance,
(iii) an amount of change per time period of an operation amount of the brake lever (104) is equal to or more than a first brake lever changing amount while the leaning vehicle (101) runs from the first point (P1) to the third point (P3),
(iv) the FCW is not output until the leaning vehicle (101) reaches the second point (P2) where the distance between the leaning vehicle (101) and the obstacle (201) in the traveling direction of the leaning vehicle (101) is equal to the first distance, and
(v) the vehicle speed of the leaning vehicle (101) at the second point (P2) is equal to the first vehicle speed,
the FCW control device (103) does not output the FCW at least while the leaning vehicle (101) runs from the second point (P2) to the third point (P3); and
the relationship 5: when
(I) the leaning vehicle (101) moves straight toward the stationary obstacle (201),
(II) the brake lever (104) is being operated in the pulling direction or in the releasing direction by the hand of the rider while the leaning vehicle (101) runs from the first point (P1) where the distance between the leaning vehicle (101) and the obstacle (201) in the traveling direction of the leaning vehicle (101) is longer than the first distance to the third point (P3) where the distance between the leaning vehicle (101) and the obstacle (201) in the traveling direction of the leaning vehicle (101) is shorter than the first distance,
(III) the amount of change per time period of the operation amount of the brake lever (104) is more than zero and less than the first brake lever changing amount while the leaning vehicle (101) runs from the first point (P1) to the third point (P3),
(IV) the FCW is not output until the leaning vehicle (101) reaches the second point (P2) where the distance between the leaning vehicle (101) and the obstacle (201) in the traveling direction of the leaning vehicle (101) is equal to the first distance, and
(V) the vehicle speed of the leaning vehicle (101) at the second point (P2) is equal to the first vehicle speed,
the FCW control device (103) is outputting the FCW at least while the leaning vehicle (101) runs from the second point (P2) to the third point (P3).

3. The leaning vehicle (101) according to claim 1 or 2, wherein the FCW control device (103) is configured to perform control to establish a relationship 6 and a relationship 7:
the relationship 6: when,
(i) after the leaning vehicle (101) moves straight on the first linear line (SL1) toward the stationary obstacle (201), the traveling direction of the leaning vehicle (101) is changed to a direction toward the second linear line (SL2), and then the leaning vehicle (101) moves straight on the second linear line (SL2) toward the stationary obstacle (201),
(ii) while the leaning vehicle (101) runs from the fourth point (P4) where the distance between the leaning vehicle (101) and the obstacle (201) in the traveling direction of the leaning vehicle (101) is longer than the first distance to the sixth point (P6) where the distance between the leaning vehicle (101) and the obstacle (201) in the traveling direction of the leaning vehicle (101) is shorter than the first distance, the rider is changing the inclination of the leaning vehicle body frame (102) in the vehicle left-right direction by making an input to the leaning vehicle (101),
(iii) the amount of change per time period of the inclination in the vehicle left-right direction of the leaning vehicle body frame (102) while the leaning vehicle (101) runs from the fourth point (P4) to the sixth point (P6) is equal to or more than a first inclination changing amount,
(iv) the FCW is not output until the leaning vehicle (101) reaches the fifth point (P5) where the distance between the leaning vehicle (101) and the obstacle (201) in the traveling direction of the leaning vehicle (101) is equal to the first distance, and
(v) the vehicle speed of the leaning vehicle (101) at the fifth point (P5) is equal to the first vehicle speed,
the FCW control device (103) does not output the FCW at least while the leaning vehicle (101) runs from the fifth point (P5) to the sixth point (P6); and
the relationship 7: when,
(I) after the leaning vehicle (101) moves straight on the first linear line (SL1) toward the stationary obstacle (201), the traveling direction of the leaning vehicle (101) is changed to a direction toward the second linear line (SL2), and then the leaning vehicle (101) moves straight on the second linear line (SL2) toward the stationary obstacle (201),
(II) the FCW is not output until the leaning vehicle (101) reaches the fifth point (P5) where the distance between the leaning vehicle (101) and the obstacle (201) in the traveling direction of the leaning vehicle (101) is equal to the first distance, and
(III) while the leaning vehicle (101) runs from the fourth point (P4) where the distance between the leaning vehicle (101) and the obstacle (201) in the traveling direction of the leaning vehicle (101) is longer than the first distance to the sixth point (P6) where the distance between the leaning vehicle (101) and the obstacle (201) in the traveling direction of the leaning vehicle (101) is shorter than the first distance, the rider is changing the inclination of the leaning vehicle body frame (102) in the vehicle left-right direction by making an input made to the leaning vehicle (101),
(IV) the amount of change per time period of the inclination in the vehicle left-right direction of the leaning vehicle body frame (102) while the leaning vehicle (101) runs from the fourth point (P4) to the sixth point (P6) is more than zero and less than the first inclination changing amount, and
(V) the vehicle speed of the leaning vehicle (101) at the fifth point (P5) is equal to the first vehicle speed,
the FCW control device (103) is outputting the FCW at least while the leaning vehicle (101) runs from the fifth point (P5) to the sixth point (P6).

4. The leaning vehicle (101) according to any one of claims 1 to 3, wherein the FCW control device (103) is configured to perform control to establish a relationship 8 and a relationship 9:
the relationship 8: while the leaning vehicle (101) is moving straight toward the stationary obstacle (201) at the second vehicle speed that is lower than the first vehicle speed, when the distance between the leaning vehicle (101) and the obstacle (201) in the traveling direction of the leaning vehicle (101) gradually decreases and becomes equal to the second distance that is shorter than the first distance, the FCW control device (103) outputs the FCW; and
the relationship 9: after the leaning vehicle (101) passes through the third point (P3) in the relationship 2 and while the leaning vehicle (101) is running straight from a seventh point (P7) where the distance between the obstacle (201) and the leaning vehicle (101) in the traveling direction of the leaning vehicle (101) is shorter than the second distance to an eighth point (P8) toward the stationary obstacle (201), when the operation amount of the brake lever (104) is zero and the vehicle speed of the leaning vehicle (101) is equal to or higher than the second vehicle speed,
the FCW control device (103) outputs the FCW at least at the eighth point (P8).

5. The leaning vehicle (101) according to any one of claims 1 to 4, wherein the FCW control device (103) is configured to perform control to establish a relationship 8 and a relationship 10:
the relationship 8: while the leaning vehicle (101) is moving straight toward the stationary obstacle (201) at the second vehicle speed that is lower than the first vehicle speed, when the distance between the leaning vehicle (101) and the obstacle (201) in the traveling direction of the leaning vehicle (101) gradually decreases and becomes equal to the second distance that is shorter than the first distance, the FCW control device (103) outputs the FCW; and
the relationship 10: after the leaning vehicle (101) passes through the sixth point (P6) in the relationship 3 and while the leaning vehicle (101) is running straight on the second linear line (SL2) from a ninth point (P9) where the distance between the obstacle (201) and the leaning vehicle (101) in the traveling direction of the leaning vehicle (101) is shorter than the second distance to a tenth point (P10) toward the stationary obstacle (201), when the inclination in the vehicle left-right direction of the leaning vehicle body frame (102) is unchanged and the vehicle speed of the leaning vehicle (101) is equal to or higher than the second vehicle speed,
the FCW control device (103) outputs the FCW at least at the tenth point (P10).

6. The leaning vehicle (101) according to any one of claims 1 to 5, wherein the FCW control device (103) is configured to perform control to establish a relationship 11 and a relationship 12:
the relationship 11: when the leaning vehicle (101) moves straight toward the stationary obstacle (201),
the FCW control device (103) continues the output of the FCW irrespective of an operation state of the brake lever (104) while the FCW is output; and
the relationship 12: when, after the leaning vehicle (101) moves straight on the first linear line (SL1) toward the stationary obstacle (201), the traveling direction of the leaning vehicle (101) is changed to a direction toward the second linear line (SL2), and then the leaning vehicle (101) moves straight on the second linear line (SL2) toward the stationary obstacle (201),
the FCW control device (103) continues the output of the FCW irrespective of a change in the inclination in the vehicle left-right direction of the leaning vehicle body frame (102) while the FCW is output.

7. The leaning vehicle (101) according to any one of claims 1 to 6, wherein the FCW control device (103) is configured to perform control to establish a relationship 13 and a relationship 14:
the relationship 13: while the leaning vehicle (101) runs straight at constant speed so that the distance in the vehicle left-right direction between the obstacle (201) and the leaning vehicle (101) is equal to a first left-right direction distance, the FCW control device (103) does not output the FCW irrespective of the distance between the obstacle (201) and the leaning vehicle (101) in the traveling direction of the leaning vehicle (101); and
the relationship 14: when (i) the leaning vehicle (101) moves straight on a third linear line (SL3),
(ii) at a first time point at which the distance between the obstacle (201) and the leaning vehicle (101) in the traveling direction of the leaning vehicle (101) becomes equal to a third distance that is shorter than the first distance, the obstacle (201) starts to move in a direction orthogonal to the third linear line (SL3) toward the third linear line (SL3) from a position where the distance in the vehicle left-right direction between the obstacle (201) and the leaning vehicle (101) is equal to the first left-right direction distance,
(iii) at a second time point, the obstacle (201) locates on the third linear line (SL3) and the obstacle (201) ends the movement, and
(iv) the vehicle speed of the leaning vehicle (101) is equal to or lower than the first vehicle speed while the leaning vehicle (101) runs from the first time point to the second time point,
the FCW control device (103) outputs the FCW at least at the second time point irrespective of an operation state of the brake lever (104).

8. The leaning vehicle (101) according to any one of claims 1 to 7, wherein the FCW control device (103) is configured to perform control to establish a relationship 13 and a relationship 15:
the relationship 13: while the leaning vehicle (101) runs straight at constant speed so that the distance in the vehicle left-right direction between the obstacle (201) and the leaning vehicle (101) is equal to a first left-right direction distance, the FCW control device (103) does not output the FCW irrespective of the distance between the obstacle (201) and the leaning vehicle (101) in the traveling direction of the leaning vehicle (101); and
the relationship 15: after the leaning vehicle (101) runs straight at a vehicle speed equal to or higher than the first vehicle speed until the shortest distance between the stationary obstacle (201) and the leaning vehicle (101) becomes equal to a fourth distance that is shorter than the first distance so that the distance in the vehicle left-right direction between the stationary obstacle (201) and the leaning vehicle (101) is maintained at the first left-right direction distance, when the traveling direction of the leaning vehicle (101) is changed and the leaning vehicle (101) runs toward the stationary obstacle (201) at a vehicle speed equal to or higher than the first vehicle speed, the FCW control device (103) outputs the FCW irrespective of a change in the inclination in the vehicle left-right direction of the leaning vehicle body frame (102).

9. The leaning vehicle (101) according to any one of claims 1 to 8, further comprising: a brake lever operation amount related sensor (106) configured to detect a physical quantity related to the operation amount of the brake lever (104) operated by the hand of the rider; and a vehicle body inclination sensor (107) configured to detect a physical quantity related to the inclination in the vehicle left-right direction of the leaning vehicle body frame (102),
the FCW control device (103) being configured to control the output of the FCW based on detection results of the brake lever operation amount related sensor (106) and the vehicle body inclination sensor (107) and the margin acquired based on the relationship between the obstacle (201) and the leaning vehicle (101).

10. The leaning vehicle (101) according to any one of claims 1 to 9, wherein the FCW control device (103) has at least one of a function of an Emergency Brake Assist, EBA, or a function of an Autonomous Emergency Braking, AEB.

11. The leaning vehicle (101) according to claims 10, wherein, when the FCW control device (103) has the function of the EBA, the FCW control device (103) is configured to activate the EBA while outputting the FCW, and when the FCW control device (103) has the function of the AEB, the FCW control device (103) is configured to activate the AEB while outputting the FCW.

12. The leaning vehicle (101) according to claim 10 or 11, wherein, when the FCW control device (103) has the function of the EBA, the FCW control device (103) is configured to perform control to establish a relationship 16 and a relationship 18, and when the FCW control device (103) has the function of the AEB, the FCW control device (103) is configured to perform control to establish a relationship 17 and a relationship 19:
the relationship 16: when (i) the leaning vehicle (101) moves straight toward the stationary obstacle (201), (ii) the vehicle speed of the leaning vehicle (101) is equal to the first vehicle speed at the second point (P2) where the distance between the leaning vehicle (101) and the obstacle (201) in the traveling direction of the leaning vehicle (101) is equal to the first distance,
(iii) the FCW starts to be output when the leaning vehicle (101) reaches the second point (P2),
(iv) the EBA is not activated until the leaning vehicle (101) reaches an eleventh point (P11) where the distance between the leaning vehicle (101) and the obstacle (201) in the traveling direction of the leaning vehicle (101) is equal to a fifth distance that is shorter than the first distance,
(v) the operation amount of the brake lever (104) is more than zero while the leaning vehicle (101) runs from the eleventh point (P11) to a twelfth point (P12), and
(vi) the vehicle speed of the leaning vehicle (101) at the eleventh point (P11) is equal to a third vehicle speed that is lower than the first vehicle speed,
the FCW control device (103) continues the EBA at least while the leaning vehicle (101) runs from the eleventh point (P11) to the twelfth point (P12);
the relationship 17: when (I) the leaning vehicle (101) moves straight toward the stationary obstacle (201),
(II) the vehicle speed of the leaning vehicle (101) is equal to the first vehicle speed at the second point (P2) where the distance between the leaning vehicle (101) and the obstacle (201) in the traveling direction of the leaning vehicle (101) is equal to the first distance,
(III) the FCW starts to be output when the leaning vehicle (101) reaches the second point (P2),
(IV) the AEB is not activated until the leaning vehicle (101) reaches a thirteenth point (P13) where the distance between the leaning vehicle (101) and the obstacle (201) in the traveling direction of the leaning vehicle (101) is equal to a sixth distance that is shorter than the first distance, and
(V) the vehicle speed of the leaning vehicle (101) at the thirteenth point (P13) is equal to a fourth vehicle speed,
the FCW control device (103) activates the AEB when the leaning vehicle (101) reaches the thirteenth point (P13);
the relationship 18: when, (a) after the leaning vehicle (101) moves straight on the first linear line (SL1) toward the stationary obstacle (201), the traveling direction of the leaning vehicle (101) is changed to a direction toward the second linear line (SL2), and then the leaning vehicle (101) moves straight on the second linear line (SL2) toward the stationary obstacle (201),
(b) the vehicle speed of the leaning vehicle (101) is equal to the first vehicle speed at a fourteenth point (P14) on the first linear line (SL1) where the distance between the leaning vehicle (101) and the obstacle (201) in the traveling direction of the leaning vehicle (101) is equal to the first distance,
(c) the FCW starts to be output when the leaning vehicle (101) reaches the fourteenth point (P14),
(d) the EBA is not activated until the leaning vehicle (101) reaches a sixteenth point (P16) where the distance between the leaning vehicle (101) and the obstacle (201) in the traveling direction of the leaning vehicle (101) is equal to the fifth distance,
(e) while the leaning vehicle (101) runs from a fifteenth point (P15) where the distance between the leaning vehicle (101) and the obstacle (201) in the traveling direction of the leaning vehicle (101) is longer than the fifth distance to a seventeenth point (P17) where the distance between the leaning vehicle (101) and the obstacle (201) in the traveling direction of the leaning vehicle (101) is shorter than the fifth distance, the rider is changing the inclination of the leaning vehicle body frame (102) in the vehicle left-right direction by making an input made to the leaning vehicle (101),
(f) the operation amount of the brake lever (104) is more than zero while the leaning vehicle (101) runs from the sixteenth point (P16) to the seventeenth point (P17), and
(g) the vehicle speed of the leaning vehicle (101) at the sixteenth point (P16) is equal to the third vehicle speed,
the FCW control device (103) does not activate the EBA at least while the leaning vehicle (101) runs from the sixteenth point (P16) to the seventeenth point (P17); and
the relationship 19: when, (A) after the leaning vehicle (101) moves straight on the first linear line (SL1) toward the stationary obstacle (201), the traveling direction of the leaning vehicle (101) is changed to a direction toward the second linear line (SL2), and then the leaning vehicle (101) moves straight on the second linear line (SL2) toward the stationary obstacle (201),
(B) the vehicle speed of the leaning vehicle (101) is equal to the first vehicle speed at the fourteenth point (P14) on the first linear line (SL1) where the distance between the leaning vehicle (101) and the obstacle (201) in the traveling direction of the leaning vehicle (101) is equal to the first distance,
(C) the FCW starts to be output when the leaning vehicle (101) reaches the fourteenth point (P14),
(D) the AEB is not activated until the leaning vehicle (101) reaches a nineteenth point (P19) where the distance between the leaning vehicle (101) and the obstacle (201) in the traveling direction of the leaning vehicle (101) is equal to the sixth distance,
(E) while the leaning vehicle (101) runs from an eighteenth point (P18) where the distance between the leaning vehicle (101) and the obstacle (201) in the traveling direction of the leaning vehicle (101) is longer than the sixth distance to a twentieth point (P20) where the distance between the leaning vehicle (101) and the obstacle (201) in the traveling direction of the leaning vehicle (101) is shorter than the sixth distance, the rider is changing the inclination of the leaning vehicle body frame (102) in the vehicle left-right direction by making an input made to the leaning vehicle (101), and
(F) the vehicle speed of the leaning vehicle (101) at the nineteenth point (P19) is equal to the fourth vehicle speed,
the FCW control device (103) does not activate the AEB at least while the leaning vehicle (101) runs from the nineteenth point (P19) to the twentieth point (P20).

## Patentansprüche

1. Ein Neigungsfahrzeug (101) mit einer Vorwärtskollisionswarnung, FCW,-Steuervorrichtung (103), die an einem Neigungsfahrzeug-Karosserierahmen (102) montiert ist, das dazu ausgebildet ist, sich beim Abbiegen nach rechts in einer Fahrzeug-Rechts-Richtung zu neigen und beim Abbiegen nach links in einer Fahrzeug-Links-Richtung zu neigen, wobei die FCW-Steuervorrichtung (103) dazu ausgebildet ist, eine FCW basierend auf einem Spielraum auszugeben, der basierend auf einer Beziehung zwischen einem Hindernis (201) und dem Neigungsfahrzeug (101) erfasst wird,
wobei der Spielraum, der basierend auf einer Beziehung zwischen einem Hindernis (201) und dem Neigungsfahrzeug (101) erfasst wird, ein Spielraum ist, wenn sich ein Fahrer mit dem Hindernis beschäftigt,
wobei das Neigungsfahrzeug (101) zumindest eines eines Frontsensors, der dazu ausgebildet ist, ein Objekt vor dem Neigungsfahrzeug (101) zu detektieren, oder einer Fahrzeug-zu-Fahrzeug-Kommunikationsvorrichtung aufweist, die dazu ausgebildet ist, von einem weiteren Fahrzeug ein Signal zu empfangen, das auf eine Ortsinformation des anderen Fahrzeugs bezogen ist,
wobei die FCW-Steuervorrichtung (103) dazu ausgebildet ist, den Spielraum basierend auf der Beziehung zwischen dem Hindernis (201) und dem Neigungsfahrzeug (101) unter Bezugnahme auf Informationen zu erfassen, die durch zumindest eines des Frontsensors oder der Fahrzeug-zu-Fahrzeug-Kommunikationsvorrichtung erfasst werden,
wobei die FCW-Steuervorrichtung (103) dazu ausgebildet ist, eine Steuerung durchzuführen, um eine Beziehung 1, eine Beziehung 2 und eine Beziehung 3 einzurichten:
die Beziehung 1: während sich das Neigungsfahrzeug (101) gerade mit einer ersten Fahrzeuggeschwindigkeit in Richtung des stationären Hindernisses (201) bewegt, wenn die Entfernung zwischen dem Neigungsfahrzeug (101) und dem Hindernis (201) in einer Bewegungsrichtung des Neigungsfahrzeugs (101) allmählich abnimmt und gleich einer ersten Entfernung wird, gibt die FCW-Steuervorrichtung (103) die FCW aus:
die Beziehung 2: wenn
(i) das Neigungsfahrzeug (101) sich gerade in Richtung des stationären Hindernisses (201) bewegt,
(ii) ein Bremshebel (104) in einer Anziehrichtung oder in einer Loslassrichtung durch eine Hand eines Fahrers bedient wird, während das Neigungsfahrzeug (101) von einem ersten Punkt (P1), an dem die Entfernung zwischen dem Neigungsfahrzeug (101) und dem Hindernis (201) in der Bewegungsrichtung des Neigungsfahrzeugs (101) länger ist als die erste Entfernung, zu einem dritten Punkt (P3) fährt, an dem die Entfernung zwischen dem Neigungsfahrzeug (101) und dem Hindernis (201) in der Bewegungsrichtung des Neigungsfahrzeugs (101) kürzer ist als die erste Entfernung,
(iii) die FCW nicht ausgegeben wird, bis das Neigungsfahrzeug (101) einen zweiten Punkt (P2) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(iv) eine Fahrzeuggeschwindigkeit des Neigungsfahrzeugs (101) an dem zweiten Punkt (P2) gleich der ersten Fahrzeuggeschwindigkeit ist,
gibt die FCW-Steuervorrichtung (102) die FCW zumindest nicht aus, während das Neigungsfahrzeug (101) von dem zweiten Punkt (P2) zu dem dritten Punkt (P3) fährt; und
die Beziehung 3: wenn,
(I) nachdem das Neigungsfahrzeug (101) sich gerade auf einer ersten linearen Linie (SL1) in Richtung des stationären Hindernisses (201) bewegt, die Bewegungsrichtung des Neigungsfahrzeugs (101) in eine Richtung in Richtung einer zweiten linearen Linie (SL2) geändert wird, die parallel zu der ersten linearen Linie (SL1) ist und von der ersten linearen Linie (SL1) um eine Entfernung getrennt ist, die kürzer ist als die Gesamtlänge des Neigungsfahrzeugs (101), und sich dann das Neigungsfahrzeug (101) gerade auf der zweiten linearen Linie (SL2) in Richtung des stationären Hindernisses (201) bewegt,
(II) während das Neigungsfahrzeug (101) von einem vierten Punkt (P4), an dem die Entfernung zwischen dem Neigungsfahrzeug (101) und dem Hindernis (201) in der Bewegungsrichtung des Neigungsfahrzeugs (101) länger ist als die erste Entfernung, zu einem sechsten Punkt (P6) fährt, an dem die Entfernung zwischen dem Neigungsfahrzeug (101) und dem Hindernis (201) in der Bewegungsrichtung des Neigungsfahrzeugs (101) kürzer ist als die erste Entfernung, der Fahrer eine Inklination des Neigungsfahrzeug-Karosserierahmens (102) in einer Fahrzeug-Links-Rechts-Richtung ändert durch Durchführen einer Eingabe in das Neigungsfahrzeug (101),
(III) die FCW nicht ausgegeben wird, bis das Neigungsfahrzeug (101) einen fünften Punkt (P5) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(IV) die Fahrzeuggeschwindigkeit des Neigungsfahrzeugs (101) an dem fünften Punkt (P5) gleich der ersten Fahrzeuggeschwindigkeit ist,
gibt die FCW-Steuervorrichtung (103) die FCW zumindest nicht aus, während das Neigungsfahrzeug (101) von dem fünften Punkt (P5) zu dem sechsten Punkt (P6) fährt.

2. Das Neigungsfahrzeug (101) gemäß Anspruch 1, bei dem die FCW-Steuervorrichtung (103) dazu ausgebildet ist, eine Steuerung durchzuführen, um eine Beziehung 4 und eine Beziehung 5 einzurichten;
die Beziehung 4: wenn
(i) das Neigungsfahrzeug (101) sich gerade in Richtung des stationären Hindernisses (201) bewegt,
(ii) der Bremshebel (104) in der Anziehrichtung oder in der Loslassrichtung durch die Hand des Fahrers bedient wird, während das Neigungsfahrzeug (101) von dem ersten Punkt (P1), an dem die Entfernung zwischen dem Neigungsfahrzeug (101) und dem Hindernis (201) in der Bewegungsrichtung des Neigungsfahrzeugs (101) länger ist als die erste Entfernung, zu dem dritten Punkt (P3) fährt, an dem die Entfernung zwischen dem Neigungsfahrzeug (101) und dem Hindernis (201) in der Bewegungsrichtung des Neigungsfahrzeugs (101) kürzer ist als die erste Entfernung,
(iii) eine Änderungsmenge pro Zeitperiode einer Bedienmenge des Bremshebels (104) größer oder gleich einer ersten Bremshebel-Änderungsmenge ist, während das Neigungsfahrzeug (101) von dem ersten Punkt (P1) zu dem dritten Punkt (P3) fährt,
(iv) die FCW nicht ausgegeben wird, bis das Neigungsfahrzeug (101) den zweiten Punkt (P2) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(v) die Fahrzeuggeschwindigkeit des Neigungsfahrzeugs (101) an dem zweiten Punkt (P2) gleich der ersten Fahrzeuggeschwindigkeit ist,
gibt die FCW-Steuervorrichtung (103) die FCW zumindest nicht aus, während das Neigungsfahrzeug (101) von dem zweiten Punkt (P2) zu dem dritten Punkt (P3) fährt; und
die Beziehung 5: wenn
(I) das Neigungsfahrzeug (101) sich gerade in Richtung des stationären Hindernisses (201) bewegt,
(II) der Bremshebel (104) in der Anziehrichtung oder in der Loslassrichtung durch die Hand des Fahrers bedient wird, während das Neigungsfahrzeug (101) von dem ersten Punkt (P1), an dem die Entfernung zwischen dem Neigungsfahrzeug (101) und dem Hindernis (201) in der Bewegungsrichtung des Neigungsfahrzeugs (101) länger ist als die erste Entfernung, zu dem dritten Punkt (P3) fährt, an dem die Entfernung zwischen dem Neigungsfahrzeug (101) und dem Hindernis (201) in der Bewegungsrichtung des Neigungsfahrzeugs (101) kürzer ist als die erste Entfernung,
(III) die Änderungsmenge pro Zeitperiode der Bedienmenge des Bremshebels (104) größer null ist und kleiner als die erste Bremshebel-Änderungsmenge, während das Neigungsfahrzeug (101) von dem ersten Punkt (P1) zu dem dritten Punkt (P3) fährt,
(IV) die FCW nicht ausgegeben wird, bis das Neigungsfahrzeug (101) den zweiten Punkt (P2) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(V) die Fahrzeuggeschwindigkeit des Neigungsfahrzeugs (101) an dem zweiten Punkt (P2) gleich der ersten Fahrzeuggeschwindigkeit ist,
gibt die FCW-Steuervorrichtung (103) die FCW zumindest aus, während das Neigungsfahrzeug (101) von dem zweiten Punkt (P2) zu dem dritten Punkt (P3) fährt.

3. Das Neigungsfahrzeug (101) gemäß Anspruch 1 oder 2, bei dem die FCW-Steuervorrichtung (103) dazu ausgebildet ist, eine Steuerung durchzuführen, um eine Beziehung 6 und eine Beziehung 7 einzurichten:
die Beziehung 6: wenn,
(i) nachdem das Neigungsfahrzeug (101) sich gerade auf der ersten linearen Linie (SL1) in Richtung des stationären Hindernisses (201) bewegt, die Bewegungsrichtung des Neigungsfahrzeugs (101) zu einer Richtung in Richtung der zweiten linearen Linie (SL2) geändert wird und sich dann das Neigungsfahrzeug (101) gerade auf der zweiten linearen Linie (SL2) in Richtung des stationären Hindernisses (201) bewegt,
(ii) während das Neigungsfahrzeug (101) von dem vierten Punkt (P4), an dem die Entfernung zwischen dem Neigungsfahrzeug (101) und dem Hindernis (201) in der Bewegungsrichtung des Neigungsfahrzeugs (101) länger ist als die erste Entfernung, zu dem sechsten Punkt (P6) fährt, an dem die Entfernung zwischen dem Neigungsfahrzeug (101) und dem Hindernis (201) in der Bewegungsrichtung des Neigungsfahrzeugs (101) kürzer ist als die erste Entfernung, der Fahrer die Inklination des Neigungsfahrzeug-Karosserierahmens (102) in der Fahrzeug-Links-Rechts-Richtung ändert durch Durchführen einer Eingabe in das Neigungsfahrzeug (101),
(iii) die Änderungsmenge pro Zeitperiode der Inklination, in der Fahrzeug-Links-Rechts-Richtung, des Neigungsfahrzeug-Karosserierahmens (102), während das Neigungsfahrzeug (101) von dem vierten Punkt (P4) zu dem sechsten Punkt (P6) fährt, größer oder gleich einer ersten Inklinationsänderungsmenge ist,
(iv) die FCW nicht ausgegeben wird, bis das Neigungsfahrzeug (101) den fünften Punkt (P5) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(v) die Fahrzeuggeschwindigkeit des Neigungsfahrzeugs (101) an dem fünften Punkt (P5) gleich der ersten Fahrzeuggeschwindigkeit ist,
gibt die FCW-Steuervorrichtung (103) die FCW zumindest nicht aus, während das Neigungsfahrzeug (101) von dem fünften Punkt (P5) zu dem sechsten Punkt (P6) fährt; und
die Beziehung 7: wenn,
(I) nachdem das Neigungsfahrzeug (101) sich gerade auf der ersten linearen Linie (SL1) in Richtung des stationären Hindernisses (201) bewegt, die Bewegungsrichtung des Neigungsfahrzeugs (101) zu einer Richtung in Richtung der zweiten linearen Linie (SL2) geändert wird und sich dann das Neigungsfahrzeug (101) gerade auf der zweiten linearen Linie (SL2) in Richtung des stationären Hindernisses (201) bewegt,
(II) die FCW nicht ausgegeben wird, bis das Neigungsfahrzeug (101) den fünften Punkt (P5) erreicht, an dem die Entfernung zwischen dem Neigungsfahrzeug (101) und dem Hindernis (201) in der Bewegungsrichtung des Neigungsfahrzeugs (101) gleich der ersten Entfernung ist, und
(III) während das Neigungsfahrzeug (101) von dem vierten Punkt (P4), an dem die Entfernung zwischen dem Neigungsfahrzeug (101) und dem Hindernis (201) in der Bewegungsrichtung des Neigungsfahrzeugs (101) länger ist als die erste Entfernung, zu dem sechsten Punkt (P6) fährt, an dem die Entfernung zwischen dem Neigungsfahrzeug (101) und dem Hindernis (201) in der Bewegungsrichtung des Neigungsfahrzeugs (101) kürzer ist als die erste Entfernung, der Fahrer die Inklination des Neigungsfahrzeug-Karosserierahmens (102) in der Fahrzeug-Links-Rechts-Richtung ändert durch Durchführen einer Eingabe, die in dem das Neigungsfahrzeug (101) erfolgt,
(IV) die Änderungsmenge pro Zeitperiode der Inklination, in der Fahrzeug-Links-Rechts-Richtung, des Neigungsfahrzeug-Karosserierahmens (102), während das Neigungsfahrzeug (101) von dem vierten Punkt (P4) zu dem sechsten Punkt (P6) fährt, größer als null ist und kleiner als die erste Inklinationsänderungsmenge, und
(V) die Fahrzeuggeschwindigkeit des Neigungsfahrzeugs (101) an dem fünften Punkt (P5) gleich der ersten Fahrzeuggeschwindigkeit ist,
gibt die FCW-Steuervorrichtung (103) die FCW zumindest aus, während das Neigungsfahrzeug (101) von dem fünften Punkt (P5) zu dem sechsten Punkt (P6) fährt,

4. Das Neigungsfahrzeug (101) gemäß einem der Ansprüche 1 bis 3, bei dem die FCW-Steuervorrichtung (103) dazu ausgebildet ist, eine Steuerung durchzuführen, um eine Beziehung 8 und eine Beziehung 9 einzurichten:
die Beziehung 8: während sich das Neigungsfahrzeug (101) gerade in Richtung des stationären Hindernisses (201) mit der zweiten Fahrzeuggeschwindigkeit bewegt, die niedriger ist als die erste Fahrzeuggeschwindigkeit, wenn die Entfernung zwischen dem Neigungsfahrzeug (101) und dem Hindernis (201) in der Bewegungsrichtung des Neigungsfahrzeugs (101) allmählich abnimmt und gleich der zweiten Entfernung wird, die kürzer ist als die erste Entfernung, gibt die FCW-Steuervorrichtung (103) die FCW aus; und
die Beziehung 9: nachdem das Neigungsfahrzeug (101) den dritten Punkt (P3) in der Beziehung 2 passiert hat und während das Neigungsfahrzeug (101) gerade von einem siebten Punkt (P7), an dem die Entfernung zwischen dem Hindernis (201) und dem Neigungsfahrzeug (101) in der Bewegungsrichtung des Neigungsfahrzeugs (101) kürzer ist als die zweite Entfernung, zu einem achten Punkt (P8) in Richtung des stationären Hindernisses (201) fährt, wenn die Bedienmenge des Bremshebels (104) null ist und die Fahrzeuggeschwindigkeit des Neigungsfahrzeugs (101) größer oder gleich der zweiten Fahrzeuggeschwindigkeit ist,
gibt die FCW-Steuervorrichtung (103) die FCW zumindest an dem achten Punkt (P8) aus.

5. Das Neigungsfahrzeug (101) gemäß einem der Ansprüche 1 bis 4, bei dem die FCW-Steuervorrichtung (103) dazu ausgebildet ist, eine Steuerung durchzuführen, um eine Beziehung 8 und eine Beziehung 10 einzurichten:
die Beziehung 8: während sich das Neigungsfahrzeug (101) gerade in Richtung des stationären Hindernisses (201) mit der zweiten Fahrzeuggeschwindigkeit bewegt, die niedriger ist als die erste Fahrzeuggeschwindigkeit, wenn die Entfernung zwischen dem Neigungsfahrzeug (101) und dem Hindernis (201) in der Bewegungsrichtung des Neigungsfahrzeugs (101) allmählich abnimmt und gleich der zweiten Entfernung wird, die kürzer ist als die erste Entfernung, gibt die FCW-Steuervorrichtung (103) die FCW aus; und
die Beziehung 10: nachdem das Neigungsfahrzeug (101) den sechsten Punkt (P6) in der Beziehung 3 passiert hat und während das Neigungsfahrzeug (101) gerade auf der zweiten linearen Linie (SL2) von einem neunten Punkt (P9), an dem die Entfernung zwischen dem Hindernis (201) und dem Neigungsfahrzeug (101) in der Bewegungsrichtung des Neigungsfahrzeugs (101) kürzer ist als die zweite Entfernung, zu einem zehnten Punkt (P10) in Richtung des stationären Hindernisses (201) fährt, wenn die Inklination, in der Fahrzeug-Links-Rechts-Richtung, des Neigungsfahrzeug-Karosserierahmens (102) unverändert ist und die Fahrzeuggeschwindigkeit des Neigungsfahrzeugs (101) größer oder gleich der zweiten Fahrzeuggeschwindigkeit ist,
gibt die FCW-Steuervorrichtung (103) die FCW zumindest an dem zehnten Punkt (P10) aus,

6. Das Neigungsfahrzeug (101) gemäß einem der Ansprüche 1 bis 5, bei dem die FCW-Steuervorrichtung (103) dazu ausgebildet ist, eine Steuerung durchzuführen, um eine Beziehung 11 und eine Beziehung 12 einzurichten:
die Beziehung 11: wenn das Neigungsfahrzeug (101) sich gerade in Richtung des stationären Hindernisses (201) bewegt,
fährt die FCW-Steuervorrichtung (103) mit der Ausgabe der FCW unabhängig von einem Bedienzustand des Bremshebels (104) fort, während die FCW ausgegeben wird; und
die Beziehung 12: wenn, nachdem das Neigungsfahrzeug (101) sich gerade auf der ersten linearen Linie (SL1) in Richtung des stationären Hindernisses (201) bewegt, die Bewegungsrichtung des Neigungsfahrzeugs (101) zu einer Richtung in Richtung der zweiten linearen Linie (SL2) geändert wird und dann sich das Neigungsfahrzeug (101) gerade auf der zweiten linearen Linie (SL2) in Richtung des stationären Hindernisses (201) bewegt,
fährt die FCW-Steuervorrichtung (103) mit der Ausgabe der FCW unabhängig von einer Änderung der Inklination, in der Fahrzeug-Links-Rechts-Richtung, des Neigungsfahrzeug-Karosserierahmens (102) fort, während die FCW ausgegeben wird.

7. Das Neigungsfahrzeug (101) gemäß einem der Ansprüche 1 bis 6, bei dem die FCW-Steuervorrichtung (103) dazu ausgebildet ist, eine Steuerung durchzuführen, um eine Beziehung 13 und eine Beziehung 14 einzurichten:
die Beziehung 13: während das Neigungsfahrzeug (101) mit konstanter Geschwindigkeit gerade fährt, so dass die Entfernung, in der Fahrzeug-Links-Rechts-Richtung, zwischen dem Hindernis (201) und dem Neigungsfahrzeug (101) gleich einer ersten Links-Rechts-Richtungsentfernung ist, gibt die FCW-Steuervorrichtung (103) die FCW unabhängig von der Entfernung zwischen dem Hindernis (201) und dem Neigungsfahrzeug (101) in der Bewegungsrichtung des Neigungsfahrzeugs (101) nicht aus; und
die Beziehung 14: wenn (i) das Neigungsfahrzeug (101) sich gerade auf einer dritten linearen Linie (SL3) bewegt,
(ii) zu einem ersten Zeitpunkt, zu dem die Entfernung zwischen dem Hindernis (201) und dem Neigungsfahrzeug (101) in der Bewegungsrichtung des Neigungsfahrzeugs (101) gleich einer dritten Entfernung wird, die kürzer ist als die erste Entfernung, das Hindernis (201) beginnt, sich in einer Richtung orthogonal zu der dritten linearen Linie (SL3) in Richtung der dritten linearen Linie (SL3) aus einer Position zu bewegen, in der die Entfernung, in der Fahrzeug-Links-Rechts-Richtung, zwischen dem Hindernis (201) und dem Neigungsfahrzeug (101) gleich der ersten Links-Rechts-Richtungsentfernung ist,
(iii) zu einem zweiten Zeitpunkt sich das Hindernis (201) auf der dritten linearen Linie (SL1) befindet und das Hindernis (201) die Bewegung beendet, und
(iv) die Fahrzeuggeschwindigkeit des Neigungsfahrzeugs (101) kleiner oder gleich der ersten Fahrzeuggeschwindigkeit ist, während das Neigungsfahrzeug (101) von dem ersten Zeitpunkt zu dem zweiten Zeitpunkt fährt,
gibt die FCW-Steuervorrichtung (103) die FCW zumindest an dem zweiten Zeitpunkt unabhängig von einem Bedienzustand des Bremshebels (104) aus.

8. Das Neigungsfahrzeug (101) gemäß einem der Ansprüche 1 bis 7, bei dem die FCW-Steuervorrichtung (103) dazu ausgebildet ist, eine Steuerung durchzuführen, um eine Beziehung 13 und eine Beziehung 15 einzurichten:
die Beziehung 13: während das Neigungsfahrzeug (101) mit konstanter Geschwindigkeit gerade fährt, so dass die Entfernung, in der Fahrzeug-Links-Rechts-Richtung, zwischen dem Hindernis (201) und dem Neigungsfahrzeug (101) gleich einer ersten Links-Rechts-Richtungsentfernung ist, gibt die FCW-Steuervorrichtung (103) die FCW unabhängig von der Entfernung zwischen dem Hindernis (201) und dem Neigungsfahrzeug (101) in der Bewegungsrichtung des Neigungsfahrzeugs (101) nicht aus; und
die Beziehung 15: nachdem das Neigungsfahrzeug (101) mit einer Fahrzeuggeschwindigkeit gerade fährt, die größer oder gleich der ersten Fahrzeuggeschwindigkeit ist, bis die kürzeste Entfernung zwischen dem stationären Hindernis (201) und dem Neigungsfahrzeug (101) gleich einer vierten Entfernung wird, die kürzer ist als die erste Entfernung, so dass die Entfernung, in der Fahrzeug-Links-Rechts-Richtung, zwischen dem stationären Hindernis (201) und dem Neigungsfahrzeug (101) bei der ersten Links-Rechts-Richtungsentfernung beibehalten wird, wenn die Bewegungsrichtung des Neigungsfahrzeugs (101) geändert wird und das Neigungsfahrzeug (101) in Richtung des stationären Hindernisses (201) fährt, mit einer Fahrzeuggeschwindigkeit, die größer oder gleich der ersten Fahrzeuggeschwindigkeit ist, gibt die FCW-Steuervorrichtung (103) die FCW unabhängig von einer Änderung der Inklination, in der Fahrzeug-Links-Rechts-Richtung, des Neigungskörper-Karosserierahmens (102) aus.

9. Das Neigungsfahrzeug (101) gemäß einem der Ansprüche 1 bis 8, das ferner Folgendes aufweist: einen auf eine Bremshebel-Bedienmenge bezogenen Sensor (106), der dazu ausgebildet ist, eine physikalische Größe in Bezug auf die Bedienmenge des Bremshebels (104) zu detektieren, der durch die Hand des Fahrers bedient wird; und einen Fahrzeugkörper-Inklinationssensor (107), der dazu ausgebildet ist, eine physikalische Größe in Bezug auf die Inklination, in der Fahrzeug-Links-Rechts-Richtung, des Neigungsfahrzeug-Karosserierahmens (102) zu detektieren,
wobei die FCW-Steuervorrichtung (103) dazu ausgebildet ist, die Ausgabe der FCW basierend auf Detektionsergebnissen des auf eine Bremshebel-Bedienmenge bezogenen Sensors (102) und des Karosserierahmen-Inklinationssensors (107) und dem Spielraum zu steuern, der basierend auf der Beziehung zwischen dem Hindernis (201) und dem Neigungsfahrzeug (101) erfasst wird.

10. Das Neigungsfahrzeug (101) gemäß einem der Ansprüche 1 bis 9, bei dem die FCW-Steuervorrichtung (103) zumindest eine einer Funktion einer Notfallbremsassistenz, EBA, oder einer Funktion eines autonomen Notfallbremsens, AEB, aufweist.

11. Das Neigungsfahrzeug (101) gemäß Anspruch 10, bei dem, wenn die FCW-Steuervorrichtung (103) die Funktion der EBA aufweist, die FCW-Steuervorrichtung (103) dazu ausgebildet ist, die EBA zu aktivieren, während die FCW ausgegeben wird, und, wenn die FCW-Steuervorrichtung (103) die Funktion des AEB aufweist, die FCW-Steuervorrichtung (103) dazu ausgebildet ist, das AEB zu aktivieren, während die FCW ausgegeben wird.

12. Das Neigungsfahrzeug (101) gemäß Anspruch 10 oder 11, bei dem, wenn die FCW-Steuervorrichtung (103) die Funktion der EBA aufweist, die FCW-Steuervorrichtung (103) dazu ausgebildet ist, eine Steuerung durchzuführen, um eine Beziehung 16 und eine Beziehung 18 einzurichten, und wenn die FCW-Steuervorrichtung (103) die Funktion des AEB aufweist, die FCW-Steuervorrichtung (103) dazu ausgebildet ist, eine Steuerung durchzuführen, um eine Beziehung 17 und eine Beziehung 19 einzurichten:
die Beziehung 16: wenn (i) das Neigungsfahrzeug (101) sich gerade in Richtung des stationären Hindernisses (201) bewegt,
(ii) die Fahrzeuggeschwindigkeit des Neigungsfahrzeugs (101) an dem zweiten Punkt (P2), an dem die Entfernung zwischen dem Neigungsfahrzeug (101) und dem Hindernis (201) in der Bewegungsrichtung des Neigungsfahrzeugs (101) gleich der ersten Entfernung ist, gleich der ersten Fahrzeuggeschwindigkeit ist,
(iii) die FCW-Ausgabe beginnt, wenn das Neigungsfahrzeug (101) den zweiten Punkt (P2) erreicht,
(iv) die EBA nicht aktiviert wird, bis das Neigungsfahrzeug (101) einen elften Punkt (P11) erreicht, an dem die Entfernung zwischen dem Neigungsfahrzeug (101) und dem Hindernis (201) in der Bewegungsrichtung des Neigungsfahrzeugs (101) gleich einer fünften Entfernung ist, die kürzer ist als die erste Entfernung,
(v) die Bedienmenge des Bremshebels (104) größer als null ist, während das Neigungsfahrzeug (101) von dem elften Punkt (P11) zu einem zwölften Punkt (P12) fährt, und
(vi) die Fahrzeuggeschwindigkeit des Neigungsfahrzeugs (101) an dem elften Punkt (P11) gleich einer dritten Fahrzeuggeschwindigkeit ist, die niedriger ist als die erste Fahrzeuggeschwindigkeit,
fährt die FCW-Steuervorrichtung (103) mit der EBA zumindest fort, während das Neigungsfahrzeug (101) von dem elften Punkt (P11) zu dem zwölften Punkt (P12) fährt;
die Beziehung 17: wenn (I) das Neigungsfahrzeug (101) sich gerade in Richtung des stationären Hindernisses (201) bewegt,
(II) die Fahrzeuggeschwindigkeit des Neigungsfahrzeugs (101) an dem zweiten Punkt (P2), an dem die Entfernung zwischen dem Neigungsfahrzeug (101) und dem Hindernis (201) in der Bewegungsrichtung des Neigungsfahrzeugs (101) gleich der ersten Entfernung ist, gleich der ersten Fahrzeuggeschwindigkeit ist,
(III) die FCW-Ausgabe beginnt, wenn das Neigungsfahrzeug (101) den zweiten Punkt (P2) erreicht,
(IV) das AEB nicht aktiviert wird, bis das Neigungsfahrzeug (101) einen dreizehnten Punkt (P13) erreicht, an dem die Entfernung zwischen dem Neigungsfahrzeug (101) und dem Hindernis (201) in der Bewegungsrichtung des Neigungsfahrzeugs (101) gleich einer sechsten Entfernung ist, die kürzer ist als die erste Entfernung, und
(V) die Fahrzeuggeschwindigkeit des Neigungsfahrzeugs (101) an dem dreizehnten Punkt (P13) gleich einer vierten Fahrzeuggeschwindigkeit ist,
aktiviert die FCW-Steuervorrichtung (103) das AEB, wenn das Neigungsfahrzeug (101) den dreizehnten Punkt (P13) erreicht;
die Beziehung 18: wenn, (a) nachdem sich das Neigungsfahrzeug (101) gerade auf der ersten linearen Linie (SL1) in Richtung des stationären Hindernisses (201) bewegt, die Bewegungsrichtung des Neigungsfahrzeugs (101) zu einer Richtung in Richtung der zweiten linearen Linie (SL2) geändert wird und sich dann das Neigungsfahrzeug (101) gerade auf der zweiten linearen Linie (SL2) in Richtung des stationären Hindernisses (201) bewegt,
(b) die Fahrzeuggeschwindigkeit des Neigungsfahrzeugs (101) an einem vierzehnten Punkt (P14) auf der ersten linearen Linie (SL1), an dem die Entfernung zwischen dem Neigungsfahrzeug (101) und dem Hindernis (201) in der Bewegungsrichtung des Neigungsfahrzeugs (101) gleich der ersten Entfernung ist, gleich der ersten Fahrzeuggeschwindigkeit ist,
(c) die FCW-Ausgabe beginnt, wenn das Neigungsfahrzeug (101) den vierzehnten Punkt (P14) erreicht,
(d) die EBA nicht aktiviert wird, bis das Neigungsfahrzeug (101) einen sechzehnten Punkt (P16) erreicht, an dem die Entfernung zwischen dem Neigungsfahrzeug (101) und dem Hindernis (201) in der Bewegungsrichtung des Neigungsfahrzeugs (101) gleich der fünften Entfernung ist,
(e) während das Neigungsfahrzeug (101) von einem fünfzehnten Punkt (P15), an dem die Entfernung zwischen dem Neigungsfahrzeug (101) und dem Hindernis (201) in der Bewegungsrichtung des Neigungsfahrzeugs (101) länger ist als die fünfzehnte Entfernung, zu einem siebzehnten Punkt (P17) fährt, an dem die Entfernung zwischen dem Neigungsfahrzeug (101) und dem Hindernis (201) in der Bewegungsrichtung des Neigungsfahrzeugs (101) kürzer ist als die fünfte Entfernung, der Fahrer die Inklination des Neigungsfahrzeug-Karosserierahmens (102) in der Fahrzeug-Links-Rechts-Richtung ändert durch Durchführen einer Eingabe, die in das Neigungsfahrzeug (101) erfolgt,
(f) die Bedienmenge des Bremshebels (104) größer als null ist, während das Neigungsfahrzeug (101) von dem sechzehnten Punkt (P16) zu dem siebzehnten Punkt (P17) fährt, und
(g) die Fahrzeuggeschwindigkeit des Neigungsfahrzeugs (101) an dem sechzehnten Punkt (P16) gleich der dritten Fahrzeuggeschwindigkeit ist,
aktiviert die FCW-Steuervorrichtung (103) die EBA zumindest nicht, während das Neigungsfahrzeug (101) von dem sechzehnten Punkt (P16) zu dem siebzehnten Punkt (P17) fährt; und
die Beziehung 19: wenn, (A) nachdem das Neigungsfahrzeug (101) sich gerade auf der ersten linearen Linie (SL1) in Richtung des stationären Hindernisses (201) bewegt, die Bewegungsrichtung des Neigungsfahrzeugs (101) zu einer Richtung in Richtung der zweiten linearen Linie (SL2) geändert wird und sich dann das Neigungsfahrzeug (101) gerade auf der zweiten linearen Linie (SL2) in Richtung des stationären Hindernisses (201) bewegt,
(B) die Fahrzeuggeschwindigkeit des Neigungsfahrzeugs (101) an dem vierzehnten Punkt (P14) auf der ersten linearen Linie (SL1), an dem die Entfernung zwischen dem Neigungsfahrzeug (101) und dem Hindernis (201) in der Bewegungsrichtung des Neigungsfahrzeugs (101) gleich der ersten Entfernung ist, gleich der ersten Fahrzeuggeschwindigkeit ist,
(C) die FCW-Ausgabe beginnt, wenn das Neigungsfahrzeug (101) den vierzehnten Punkt (P14) erreicht,
(D) das AEB nicht aktiviert wird, bis das Neigungsfahrzeug (101) einen neunzehnten Punkt (P19) erreicht, an dem die Entfernung zwischen dem Neigungsfahrzeug (101) und dem Hindernis (201) in der Bewegungsrichtung des Neigungsfahrzeugs (101) gleich der sechsten Entfernung ist,
(E) während das Neigungsfahrzeug (101) von einem achtzehnten Punkt (P18), an dem die Entfernung zwischen dem Neigungsfahrzeug (101) und dem Hindernis (201) in der Bewegungsrichtung des Neigungsfahrzeugs (101) länger ist als die sechste Entfernung, zu einem zwanzigsten Punkt (P20) fährt, an dem die Entfernung zwischen dem Neigungsfahrzeug (101) und dem Hindernis (201) in der Bewegungsrichtung des Neigungsfahrzeugs (101) kürzer ist als die sechste Entfernung, der Fahrer die Inklination des Neigungsfahrzeug-Karosserierahmens (102) in der Fahrzeug-Links-Rechts-Richtung ändert durch Durchführen einer Eingabe, die in das Neigungsfahrzeug (101) erfolgt, und
(F) die Fahrzeuggeschwindigkeit des Neigungsfahrzeugs (101) an dem neunzehnten Punkt (P19) gleich der vierten Fahrzeuggeschwindigkeit ist,
aktiviert die FCW-Steuervorrichtung (103) das AEB zumindest nicht, während das Neigungsfahrzeug (101) von dem neunzehnten Punkt (P19) zu dem zwanzigsten Punkt (P20) fährt.

## Revendications

1. Véhicule à inclinaison (101) comportant un dispositif de commande d'Avertissement de Collision en Avant, FCW (103), qui est monté sur un châssis de carrosserie de véhicule à inclinaison (102), qui est configuré pour s'incliner dans une direction vers la droite du véhicule lors d'un virage à droite et pour s'incliner dans une direction vers la gauche du véhicule lors d'un virage à gauche, le dispositif de commande de FCW (103) étant configuré pour sortir un FCW sur base d'une marge acquise sur base du rapport entre un obstacle (201) et le véhicule à inclinaison (101),
la marge acquise sur base du rapport entre un obstacle (201) et le véhicule à inclinaison (101) est une marge lorsqu'un conducteur affronte l'obstacle,
le véhicule à inclinaison (101) comprenant au moins un capteur avant configuré pour détecter un objet devant le véhicule à inclinaison (101) ou un appareil de communication de véhicule à véhicule configuré pour recevoir, d'un autre véhicule, un signal relatif à des informations de localisation de l'autre véhicule,
le dispositif de commande de FCW (103) étant configuré pour acquérir la marge sur base du rapport entre l'obstacle (201) et le véhicule à inclinaison (101), en référence aux informations acquises par au moins l'un parmi le capteur avant ou l'appareil de communication de véhicule à véhicule,
le dispositif de commande de FCW (103) étant configuré pour effectuer une commande pour établir un rapport 1, un rapport 2 et un rapport 3:
le rapport 1: pendant que le véhicule à inclinaison (101) se déplace tout droit vers l'obstacle stationnaire (201) à une première vitesse de véhicule, lorsque la distance entre le véhicule à inclinaison (101) et l'obstacle (201) dans une direction de circulation du véhicule à inclinaison (101) diminue progressivement et devient égale à une première distance, le dispositif de commande de FCW (103) sort le FCW;
le rapport 2: lorsque
(i) le véhicule à inclinaison (101) se déplace tout droit vers l'obstacle stationnaire (201),
(ii) un levier de frein (104) est actionné dans une direction de traction ou dans une direction de relâchement par la main d'un conducteur pendant que le véhicule à inclinaison (101) circule d'un premier point (P1), où la distance entre le véhicule à inclinaison (101) et l'obstacle (201) dans la direction de circulation du véhicule à inclinaison (101) est plus longue que la première distance, vers un troisième point (P3), où la distance entre le véhicule à inclinaison (101) et l'obstacle (201) dans la direction de circulation du véhicule à inclinaison (101) est plus courte que la première distance,
(iii) le FCW n'est pas sorti jusqu'à ce que le véhicule à inclinaison (101) atteigne un deuxième point (P2), où la distance entre le véhicule à inclinaison (101) et l'obstacle (201) dans la direction de circulation du véhicule à inclinaison (101) est égale à la première distance, et
(iv) la vitesse de véhicule du véhicule à inclinaison (101) au deuxième point (P2) est égale à la première vitesse de véhicule,
le dispositif de commande de FCW (103) ne sort pas le FCW au moins pendant que le véhicule à inclinaison (101) circule du deuxième point (P2) vers le troisième point (P3); et
le rapport 3: lorsque,
(I) après que le véhicule à inclinaison (101) se déplace tout droit sur une première ligne linéaire (SL1) vers l'obstacle stationnaire (201), la direction de circulation du véhicule à inclinaison (101) est changée à une direction vers une deuxième ligne linéaire (SL2) qui est parallèle à la première ligne linéaire (SL1) et est séparée de la première ligne linéaire (SL1) d'une distance plus courte que la longueur totale du véhicule à inclinaison (101), et le véhicule à inclinaison (101) se déplace alors tout droit sur la deuxième ligne linéaire (SL2) vers l'obstacle stationnaire (201),
(II) pendant que le véhicule à inclinaison (101) circule d'un quatrième point (P4), où la distance entre le véhicule à inclinaison (101) et l'obstacle (201) dans la direction de circulation du véhicule à inclinaison (101) est plus longue que la première distance, vers un sixième point (P6), où la distance entre le véhicule à inclinaison (101) et l'obstacle (201) dans la direction de circulation du véhicule à inclinaison (101) est plus courte que la première distance, le conducteur change l'inclinaison du châssis de carrosserie de véhicule à inclinaison (102) dans une direction gauche-droite de véhicule en effectuant une entrée sur le véhicule à inclinaison (101),
(III) le FCW n'est pas sorti jusqu'à ce que le véhicule à inclinaison (101) atteigne un cinquième point (P5), où la distance entre le véhicule à inclinaison (101) et l'obstacle (201) dans la direction de circulation du véhicule à inclinaison (101) est égale à la première distance, et
(IV) la vitesse de véhicule du véhicule à inclinaison (101) au cinquième point (P5) est égale à la première vitesse de véhicule,
le dispositif de commande de FCW (103) ne sort pas le FCW au moins pendant que le véhicule à inclinaison (101) circule du cinquième point (P5) vers le sixième point (P6).

2. Véhicule à inclinaison (101) selon la revendication 1, dans lequel le dispositif de commande de FCW (103) est configuré pour effectuer une commande pour établir un rapport 4 et un rapport 5:
le rapport 4: lorsque
(i) le véhicule à inclinaison (101) se déplace tout droit vers l'obstacle stationnaire (201),
(ii) le levier de frein (104) est actionné dans la direction de traction ou dans la direction de relâchement par la main du conducteur pendant que le véhicule à inclinaison (101) circule du premier point (P1), où la distance entre le véhicule à inclinaison (101) et l'obstacle (201) dans la direction de circulation du véhicule à inclinaison (101) est plus longue que la première distance, vers le troisième point (P3), où la distance entre le véhicule à inclinaison (101) et l'obstacle (201) dans la direction de circulation du véhicule à inclinaison (101) est plus courte que la première distance,
(iii) une quantité de changement par laps de temps d'une quantité d'actionnement du levier de frein (104) est égale ou supérieure à une première quantité de changement de levier de frein pendant que le véhicule à inclinaison (101) circule du premier point (P1) vers le troisième point (P3),
(iv) le FCW n'est pas sorti jusqu'à ce que le véhicule à inclinaison (101) atteigne le deuxième point (P2), où la distance entre le véhicule à inclinaison (101) et l'obstacle (201) dans la direction de circulation du véhicule à inclinaison (101) est égale à la première distance, et
(v) la vitesse de véhicule du véhicule à inclinaison (101) au deuxième point (P2) est égale à la première vitesse de véhicule,
le dispositif de commande de FCW (103) ne sort pas le FCW au moins pendant que le véhicule à inclinaison (101) circule du deuxième point (P2) vers le troisième point (P3); et
le rapport 5: lorsque
(I) le véhicule à inclinaison (101) se déplace tout droit vers l'obstacle stationnaire (201),
(II) le levier de frein (104) est actionné dans la direction de traction ou dans la direction de relâchement par la main du conducteur pendant que le véhicule à inclinaison (101) circule du premier point (P1), où la distance entre le véhicule à inclinaison (101) et l'obstacle (201) dans la direction de circulation du véhicule à inclinaison (101) est plus longue que la première distance, vers le troisième point (P3), où la distance entre le véhicule à inclinaison (101) et l'obstacle (201) dans la direction de circulation du véhicule à inclinaison (101) est plus courte que la première distance,
(III) la quantité de changement par laps de temps de la quantité d'actionnement du levier de frein (104) est supérieure à zéro et inférieure à la première quantité de changement de levier de frein pendant que le véhicule à inclinaison (101) circule du premier point (P1) vers le troisième point (P3),
(IV) le FCW n'est pas sorti jusqu'à ce que le véhicule à inclinaison (101) atteigne le deuxième point (P2), où la distance entre le véhicule à inclinaison (101) et l'obstacle (201) dans la direction de circulation du véhicule à inclinaison (101) est égale à la première distance, et
(V) la vitesse de véhicule du véhicule à inclinaison (101) au deuxième point (P2) est égale à la première vitesse de véhicule,
le dispositif de commande de FCW (103) sort le FCW au moins pendant que le véhicule à inclinaison (101) circule du deuxième point (P2) vers le troisième point (P3).

3. Véhicule à inclinaison (101) selon la revendication 1 ou 2, dans lequel le dispositif de commande de FCW (103) est configuré pour effectuer une commande pour établir un rapport 6 et un rapport 7:
le rapport 6: lorsque,
(i) après que le véhicule à inclinaison (101) se déplace tout droit sur la première ligne linéaire (SL1) vers l'obstacle stationnaire (201), la direction de circulation du véhicule à inclinaison (101) est modifiée à une direction vers la deuxième ligne linéaire (SL2), et le véhicule à inclinaison (101) se déplace alors tout droit sur la deuxième ligne linéaire (SL2) vers l'obstacle stationnaire (201),
(ii) pendant que le véhicule à inclinaison (101) circule du quatrième point (P4), où la distance entre le véhicule à inclinaison (101) et l'obstacle (201) dans la direction de circulation du véhicule à inclinaison (101) est plus longue que la première distance, vers le sixième point (P6), où la distance entre le véhicule à inclinaison (101) et l'obstacle (201) dans la direction de circulation du véhicule à inclinaison (101) est plus courte que la première distance, le conducteur change l'inclinaison du châssis de carrosserie de véhicule à inclinaison (102) dans la direction gauche-droite de véhicule en effectuant une entrée sur le véhicule à inclinaison (101),
(iii) la quantité de changement par laps de temps de l'inclinaison dans la direction gauche-droite de véhicule du châssis de carrosserie de véhicule à inclinaison (102) pendant que le véhicule à inclinaison (101) circule du quatrième point (P4) vers le sixième point (P6) est égale ou supérieure à une première quantité de changement d'inclinaison,
(iv) le FCW n'est pas sorti jusqu'à ce que le véhicule à inclinaison (101) atteigne le cinquième point (P5), où la distance entre le véhicule à inclinaison (101) et l'obstacle (201) dans la direction de circulation du véhicule à inclinaison (101) est égale à la première distance, et
(v) la vitesse de véhicule du véhicule à inclinaison (101) au cinquième point (P5) est égale à la première vitesse de véhicule,
le dispositif de commande de FCW (103) ne sort pas le FCW au moins pendant que le véhicule à inclinaison (101) circule du cinquième point (P5) vers le sixième point (P6); et
le rapport 7: lorsque,
(I) après que le véhicule à inclinaison (101) se déplace tout droit sur la première ligne linéaire (SL1) vers l'obstacle stationnaire (201), la direction de circulation du véhicule à inclinaison (101) est modifiée à une direction vers la deuxième ligne linéaire (SL2), et le véhicule à inclinaison (101) se déplace alors tout droit sur la deuxième ligne linéaire (SL2) vers l'obstacle stationnaire (201),
(II) le FCW n'est pas sorti jusqu'à ce que le véhicule à inclinaison (101) atteigne le cinquième point (P5), où la distance entre le véhicule à inclinaison (101) et l'obstacle (201) dans la direction de circulation du véhicule à inclinaison (101) est égale à la première distance, et
(III) pendant que le véhicule à inclinaison (101) circule du quatrième point (P4), où la distance entre le véhicule à inclinaison (101) et l'obstacle (201) dans la direction de circulation du véhicule à inclinaison (101) est plus longue que la première distance, vers le sixième point (P6), où la distance entre le véhicule à inclinaison (101) et l'obstacle (201) dans la direction de circulation du véhicule à inclinaison (101) est plus courte que la première distance, le conducteur change l'inclinaison du châssis de carrosserie de véhicule à inclinaison (102) dans la direction gauche-droite de véhicule en effectuant une entrée effectuée sur le véhicule à inclinaison (101),
(IV) la quantité de changement par laps de temps de l'inclinaison dans la direction gauche-droite de véhicule du châssis de carrosserie de véhicule à inclinaison (102) pendant que le véhicule à inclinaison (101) circule du quatrième point (P4) vers le sixième point (P6) est supérieure à zéro et inférieure à la première quantité de changement d'inclinaison, et
(V) la vitesse de véhicule du véhicule à inclinaison (101) au cinquième point (P5) est égale à la première vitesse de véhicule,
le dispositif de commande de FCW (103) sort le FCW au moins pendant que le véhicule à inclinaison (101) circule du cinquième point (P5) vers le sixième point (P6).

4. Véhicule à inclinaison (101) selon l'une quelconque des revendications 1 à 3, dans lequel le dispositif de commande de FCW (103) est configuré pour effectuer une commande pour établir un rapport 8 et un rapport 9:
le rapport 8: pendant que le véhicule à inclinaison (101) se déplace tout droit vers l'obstacle stationnaire (201) à la deuxième vitesse de véhicule, qui est inférieure à la première vitesse de véhicule, lorsque la distance entre le véhicule à inclinaison (101) et l'obstacle (201) dans la direction de circulation du véhicule à inclinaison (10 1) diminue progressivement et devient égale à la deuxième distance, qui est plus courte que la première distance, le dispositif de commande de FCW (103) sort le FCW; et
le rapport 9: après que le véhicule à inclinaison (101) passe par le troisième point (P3) dans le rapport 2 et pendant que le véhicule à inclinaison (101) circule tout droit d'un septième point (P7), où la distance entre l'obstacle (201) et le véhicule à inclinaison (101) dans la direction de circulation du véhicule à inclinaison (101) est plus courte que la deuxième distance, vers un huitième point (P8) vers l'obstacle stationnaire (201), lorsque la quantité d'actionnement du levier de frein (104) est zéro et que la vitesse de véhicule du véhicule à inclinaison (101) est égale ou supérieure à la deuxième vitesse de véhicule,
le dispositif de commande de FCW (103) sort le FCW au moins au huitième point (P8).

5. Véhicule à inclinaison (101) selon l'une quelconque des revendications 1 à 4, dans lequel le dispositif de commande de FCW (103) est configuré pour effectuer une commande pour établir un rapport 8 et un rapport 10:
le rapport 8: pendant que le véhicule à inclinaison (101) se déplace tout droit vers l'obstacle stationnaire (201) à la deuxième vitesse de véhicule, qui est inférieure à la première vitesse de véhicule, lorsque la distance entre le véhicule à inclinaison (101) et l'obstacle (201) dans la direction de circulation du véhicule à inclinaison (101) diminue progressivement et devient égale à la deuxième distance, qui est plus courte que la première distance, le dispositif de commande de FCW (103) sort le FCW; et
le rapport 10: après que le véhicule à inclinaison (101) passe par le sixième point (P6) dans le rapport 3 et pendant que le véhicule à inclinaison (101) circule tout droit sur la deuxième ligne linéaire (SL2) d'un neuvième point (P9), où la distance entre l'obstacle (201) et le véhicule à inclinaison (101) dans la direction de circulation du véhicule à inclinaison (101) est plus courte que la deuxième distance, vers un dixième point (P10) vers l'obstacle stationnaire (201), lorsque l'inclinaison dans la direction gauche-droite de véhicule du châssis de carrosserie de véhicule à inclinaison (102) est inchangée et que la vitesse de véhicule du véhicule à inclinaison (101) est égale ou supérieure à la deuxième vitesse de véhicule,
le dispositif de commande de FCW (103) sort le FCW au moins au dixième point (P10).

6. Véhicule à inclinaison (101) selon l'une quelconque des revendications 1 à 5, dans lequel le dispositif de commande de FCW (103) est configuré pour effectuer une commande pour établir un rapport 11 et un rapport 12:
le rapport 11: lorsque le véhicule à inclinaison (101) se déplace tout droit vers l'obstacle stationnaire (201),
le dispositif de commande de FCW (103) continue la sortie du FCW, indépendamment de l'état d'actionnement du levier de frein (104) pendant que le FCW est sorti; et
le rapport 12: lorsque, après que le véhicule à inclinaison (101) se déplace tout droit sur la première ligne linéaire (SL1) vers l'obstacle stationnaire (201), la direction de circulation du véhicule à inclinaison (101) est changée à une direction vers la deuxième ligne linéaire (SL2), et le véhicule à inclinaison (101) se déplace alors tout droit sur la deuxième ligne linéaire (SL2) vers l'obstacle stationnaire (201),
le dispositif de commande de FCW (103) continue la sortie du FCW, indépendamment d'un changement dans l'inclinaison dans la direction gauche-droite de véhicule du châssis de carrosserie de véhicule à inclinaison (102) pendant que le FCW est sorti.

7. Véhicule à inclinaison (101) selon l'une quelconque des revendications 1 à 6, dans lequel le dispositif de commande de FCW (103) est configuré pour effectuer une commande pour établir un rapport 13 et un rapport 14:
le rapport 13: pendant que le véhicule à inclinaison (101) circule tout droit à vitesse constante de sorte que la distance dans la direction gauche-droite de véhicule entre l'obstacle (201) et le véhicule à inclinaison (101) soit égale à une première distance dans la direction gauche-droite, le dispositif de commande de FCW (103) ne sort pas le FCW, indépendamment de la distance entre l'obstacle (201) et le véhicule à inclinaison (101) dans la direction de circulation du véhicule à inclinaison (101); et
le rapport 14: lorsque (i) le véhicule à inclinaison (101) se déplace tout droit sur une troisième ligne linéaire (SL3),
(ii) à un premier moment auquel la distance entre l'obstacle (201) et le véhicule à inclinaison (101) dans la direction de circulation du véhicule à inclinaison (101) devient égale à une troisième distance, qui est plus courte que la première distance, l'obstacle (201) commence à se déplacer dans une direction orthogonale à la troisième ligne linéaire (SL3) vers la troisième ligne linéaire (SL3) à partir d'une position où la distance dans la direction gauche-droite de véhicule entre l'obstacle (201) et le véhicule à inclinaison (101) est égale à la première distance dans la direction gauche-droite,
(iii) à un deuxième moment, l'obstacle (201) se situe sur la troisième ligne linéaire (SL3) et l'obstacle (201) termine le mouvement, et
(iv) la vitesse de véhicule du véhicule à inclinaison (101) est égale ou est inférieure à la première vitesse de véhicule pendant que le véhicule à inclinaison (101) circule du premier moment au deuxième moment,
le dispositif de commande de FCW (103) sort le FCW au moins au deuxième moment, indépendamment de l'état d'actionnement du levier de frein (104).

8. Véhicule à inclinaison (101) selon l'une quelconque des revendications 1 à 7, dans lequel le dispositif de commande de FCW (103) est configuré pour effectuer une commande pour établir un rapport 13 et un rapport 15:
le rapport 13: pendant que le véhicule à inclinaison (101) circule tout droit à vitesse constante de sorte que la distance dans la direction gauche-droite de véhicule entre l'obstacle (201) et le véhicule à inclinaison (101) soit égale à une première distance dans la direction gauche-droite, le dispositif de commande de FCW (103) ne sort pas le FCW, indépendamment de la distance entre l'obstacle (201) et le véhicule à inclinaison (101) dans la direction de circulation du véhicule à inclinaison (101); et
le rapport 15: après que le véhicule à inclinaison (101) circule tout droit à une vitesse de véhicule égale ou supérieure à la première vitesse de véhicule jusqu'à ce que la distance la plus courte entre l'obstacle stationnaire (201) et le véhicule à inclinaison (101) devienne égale à une quatrième distance, qui est plus courte que la première distance, de sorte que la distance dans la direction gauche-droite de véhicule entre l'obstacle stationnaire (201) et le véhicule à inclinaison (101) soit maintenue à la première distance dans la direction gauche-droite, lorsque la direction de circulation du véhicule à inclinaison (101) est changée et que le véhicule à inclinaison (101) circule vers l'obstacle stationnaire (201) à une vitesse de véhicule égale ou supérieure à la première vitesse de véhicule, le dispositif de commande de FCW (103) sort le FCW, indépendamment d'un changement de l'inclinaison dans la direction gauche-droite de véhicule du châssis de carrosserie de véhicule à inclinaison (102).

9. Véhicule à inclinaison (101) selon l'une quelconque des revendications 1 à 8, comprenant par ailleurs: un capteur relatif à la quantité d'actionnement de levier de frein (106) configuré pour détecter une quantité physique relative à la quantité d'actionnement du levier de frein (104) actionné par la main du conducteur; et un capteur d'inclinaison de carrosserie de véhicule (107) configuré pour détecter une quantité physique relative à l'inclinaison dans la direction gauche-droite de véhicule du châssis de carrosserie de véhicule à inclinaison (102),
le dispositif de commande de FCW (103) étant configuré pour commander la sortie du FCW sur base des résultats de détection du capteur relatif à la quantité d'actionnement de levier de frein (106) et du capteur d'inclinaison de carrosserie de véhicule (107) et de la marge acquise sur base du rapport entre le obstacle (201) et le véhicule à inclinaison (101).

10. Véhicule à inclinaison (101) selon l'une quelconque des revendications 1 à 9, dans lequel le dispositif de commande de FCW (103) présente au moins l'une parmi une fonction d'Assistance au Freinage d'Urgence, EBA, ou une fonction de Freinage d'Urgence Autonome, AEB.

11. Véhicule à inclinaison (101) selon la revendication 10, dans lequel, lorsque le dispositif de commande de FCW (103) présente la fonction d'EBA, le dispositif de commande de FCW (103) est configuré pour activer l'EBA tout en sortant le FCW, et lorsque le dispositif de commande de FCW (103) présente la fonction d'AEB, le dispositif de commande de FCW (103) est configuré pour activer l'AEB tout en sortant le FCW.

12. Véhicule à inclinaison (101) selon la revendication 10 ou 11, dans lequel, lorsque le dispositif de commande de FCW (103) présente la fonction d'EBA, le dispositif de commande de FCW (103) est configuré pour effectuer une commande pour établir un rapport 16 et un rapport 18 et, lorsque le dispositif de commande de FCW (103) présente la fonction d'AEB, le dispositif de commande de FCW (103) est configuré pour effectuer une commande pour établir un rapport 17 et un rapport 19:
le rapport 16: lorsque (i) le véhicule à inclinaison (101) se déplace tout droit vers l'obstacle stationnaire (201), (ii) la vitesse de véhicule du véhicule à inclinaison (101) est égale à la première vitesse de véhicule au deuxième point (P2), où la distance entre le véhicule à inclinaison (101) et l'obstacle (201) dans la direction de circulation du véhicule à inclinaison (101) est égale à la première distance,
(iii) le FCW commence à être sorti lorsque le véhicule à inclinaison (101) atteint le deuxième point (P2),
(iv) l'EBA n'est pas activé jusqu'à ce que le véhicule à inclinaison (101) atteigne un onzième point (P11), où la distance entre le véhicule à inclinaison (101) et l'obstacle (201) dans la direction de circulation du véhicule à inclinaison (101) est égale à une cinquième distance plus courte que la première distance,
(v) la quantité d'actionnement du levier de frein (104) est supérieure à zéro pendant que le véhicule à inclinaison (101) circule du onzième point (P11) vers un douzième point (P12), et
(vi) la vitesse du véhicule à inclinaison (101) au onzième point (P11) est égale à une troisième vitesse de véhicule, qui est inférieure à la première vitesse de véhicule,
le dispositif de commande de FCW (103) continue l'EBA au moins pendant que le véhicule à inclinaison (101) circule du onzième point (P11) vers le douzième point (P12);
le rapport 17: lorsque (I) le véhicule à inclinaison (101) se déplace tout droit vers l'obstacle stationnaire (201),
(II) la vitesse de véhicule du véhicule à inclinaison (101) est égale à la première vitesse de véhicule au deuxième point (P2), où la distance entre le véhicule à inclinaison (101) et l'obstacle (201) dans la direction de circulation du véhicule à inclinaison (101) est égale à la première distance,
(III) le FCW commence à être sorti lorsque le véhicule à inclinaison (101) atteint le deuxième point (P2),
(IV) l'AEB n'est pas activé jusqu'à ce que le véhicule à inclinaison (101) atteigne un treizième point (P13), où la distance entre le véhicule à inclinaison (101) et l'obstacle (201) dans la direction de circulation du véhicule à inclinaison (101) est égale à une sixième distance plus courte que la première distance, et
(V) la vitesse de véhicule du véhicule à inclinaison (101) au treizième point (P13) est égale à une quatrième vitesse de véhicule,
le dispositif de commande de FCW (103) active l'AEB lorsque le véhicule à inclinaison (101) atteint le treizième point (P13);
le rapport 18: lorsque, (a) après que le véhicule à inclinaison (101) se déplace tout droit sur la première ligne linéaire (SL1) vers l'obstacle stationnaire (201), la direction de circulation du véhicule à inclinaison (101) est changée à une direction vers la deuxième ligne linéaire (SL2), et le véhicule à inclinaison (101) se déplace alors tout droit sur la deuxième ligne linéaire (SL2) vers l'obstacle stationnaire (201),
(b) la vitesse de véhicule du véhicule à inclinaison (101) est égale à la première vitesse de véhicule à un quatorzième point (P14) sur la première ligne linéaire (SL1) où la distance entre le véhicule à inclinaison (101) et l'obstacle (201) dans la direction de circulation du véhicule à inclinaison (101) est égale à la première distance,
(c) le FCW commence à être sorti lorsque le véhicule à inclinaison (101) atteint le quatorzième point (P14),
(d) l'EBA n'est pas activé jusqu'à ce que le véhicule à inclinaison (101) atteigne un seizième point (P16) où la distance entre le véhicule à inclinaison (101) et l'obstacle (201) dans la direction de circulation du véhicule à inclinaison (101) est égale à la cinquième distance,
(e) pendant que le véhicule à inclinaison (101) circule d'un quinzième point (P15) où la distance entre le véhicule à inclinaison (101) et l'obstacle (201) dans la direction de circulation du véhicule à inclinaison (101) est plus longue que la cinquième distance à un dix-septième point (P17), où la distance entre le véhicule à inclinaison (101) et l'obstacle (201) dans la direction de circulation du véhicule à inclinaison (101) est plus courte que la cinquième distance, le conducteur change l'inclinaison du châssis de carrosserie du véhicule à inclinaison (102) dans la direction gauche-droite du véhicule en effectuant une entrée réalisée sur le véhicule à inclinaison (101),
(f) la quantité d'actionnement du levier de frein (104) est supérieure à zéro pendant que le véhicule à inclinaison (101) circule du seizième point (P16) vers le dix-septième point (P17), et
(g) la vitesse de véhicule du véhicule à inclinaison (101) au seizième point (P16) est égale à la troisième vitesse de véhicule,
le dispositif de commande de FCW (103) n'active pas l'EBA au moins pendant que le véhicule à inclinaison (101) se déplace du seizième point (P16) vers le dix-septième point (P17); et
le rapport 19: lorsque, (A) après que le véhicule à inclinaison (101) se déplace tout droit sur la première ligne linéaire (SL1) vers l'obstacle stationnaire (201), la direction de circulation du véhicule à inclinaison (101) est changée à une direction vers la deuxième ligne linéaire (SL2), et le véhicule à inclinaison (101) se déplace alors tout droit sur la deuxième ligne linéaire (SL2) vers l'obstacle stationnaire (201),
(B) la vitesse de véhicule du véhicule à inclinaison (101) est égale à la première vitesse de véhicule au quatorzième point (P14) sur la première ligne linéaire (SL1), où la distance entre le véhicule à inclinaison (101) et l'obstacle (201) dans la direction de circulation du véhicule à inclinaison (101) est égale à la première distance,
(C) le FCW commence à être sorti lorsque le véhicule à inclinaison (101) atteint le quatorzième point (P14),
(D) l'AEB n'est pas activé jusqu'à ce que le véhicule à inclinaison (101) atteigne un dix-neuvième point (P19), où la distance entre le véhicule à inclinaison (101) et l'obstacle (201) dans la direction de circulation du véhicule à inclinaison (101) est égale à la sixième distance,
(E) pendant que le véhicule à inclinaison (101) circule d'un dix-huitième point (P18) où la distance entre le véhicule à inclinaison (101) et l'obstacle (201) dans la direction de circulation du véhicule à inclinaison (101) est plus longue que la sixième distance à un vingtième point (P20) où la distance entre le véhicule à inclinaison (101) et l'obstacle (201) dans la direction de circulation du véhicule à inclinaison (101) est plus courte que la sixième distance, le conducteur change l'inclinaison du châssis de carrosserie du véhicule à inclinaison (102) dans la direction gauche-droite du véhicule en effectuant une entrée réalisée sur le véhicule à inclinaison (101), et
(F) la vitesse de véhicule du véhicule à inclinaison (101) au dix-neuvième point (P19) est égale à la quatrième vitesse de véhicule,
le dispositif de commande de FCW (103) n'active pas l'AEB au moins pendant que le véhicule à inclinaison (101) circule du dix-neuvième point (P19) vers le vingtième point (P20).
